(19) Europäisches Patentamt
European Patent Office
Office européen des brevets

(11) **EP 3 956 125 B1**

(12) **FASCICULE DE BREVET EUROPEEN**

(45) Date de publication et mention de la délivrance du brevet:
**05.07.2023 Bulletin 2023/27**

(21) Numéro de dépôt: **20713906.4**

(22) Date de dépôt: **30.03.2020**

(51) Classification Internationale des Brevets (IPC):
**B29C 49/78** *(2006.01)* **B29C 49/06** *(2006.01)*
**B29K 67/00** *(2006.01)* **B29L 31/00** *(2006.01)*

(52) Classification Coopérative des Brevets (CPC):
**B29C 49/78;** B29C 49/06; B29C 49/783;
B29C 2949/0715; B29K 2067/003; B29L 2031/7158

(86) Numéro de dépôt international:
**PCT/EP2020/058925**

(87) Numéro de publication internationale:
**WO 2020/212124 (22.10.2020 Gazette 2020/43)**

(54) **PROCEDE DE REGULATION D'UNE PRODUCTION CYCLIQUE DE RECIPIENTS PAR ETIRAGE-SOUFFLAGE**

VERFAHREN ZUR REGELUNG DER ZYKLISCHEN HERSTELLUNG VON BEHÄLTERN DURCH STRECKBLASEN

METHOD FOR REGULATING THE CYCLIC PRODUCTION OF CONTAINERS BY STRETCH-BLOWING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2019 FR 1904109**

(43) Date de publication de la demande:
**23.02.2022 Bulletin 2022/08**

(60) Demande divisionnaire:
**22207519.4 / 4 159 409**

(73) Titulaire: **Sidel Participations**
**76930 Octeville-sur-Mer (FR)**

(72) Inventeur: **DELAUNAY, Arnaud**
**76930 OCTEVILLE SUR MER (FR)**

(74) Mandataire: **Sidel Group**
**c/o Sidel Participations**
**Avenue de la Patrouille de France**
**76930 Octeville-sur-mer (FR)**

(56) Documents cités:
**US-A1- 2010 090 375 US-A1- 2010 176 528**
**US-A1- 2015 190 959**

**Description**

La présente invention concerne un procédé de régulation d'une production cyclique de récipients par étirage-soufflage à partir de préformes en matière plastique dans une machine comprenant une ou plusieurs stations d'étirage-soufflage conçues chacune pour produire un récipient au cours d'un cycle de production, et pourvues chacune d'une électrovanne de présoufflage raccordant fluidiquement la préforme à une source de fluide sous pression pendant une phase de présoufflage.

La production cyclique de récipients par étirage-soufflage comporte typiquement le chauffage d'une préforme en matière plastique jusqu'à la température de transition vitreuse de la préforme, puis l'introduction de la préforme chauffée dans un moule, l'injection de fluide sous pression dans la préforme pour former un récipient dans le moule, et le retrait du récipient du moule.

L'injection de fluide sous pression comprend elle-même plusieurs étapes successives. Une première étape, dite de présoufflage consiste à injecter un fluide sous pression réduite, dite de présoufflage et généralement comprise entre 5 et 16 bars, dans la préforme de façon à former une bulle pendant qu'une tige d'étirage étire la préforme. La tige d'étirage entraîne un étirage mécanique selon une direction longitudinale de la préforme tandis que l'injection de fluide sous pression entraîne un étirage selon une direction transversale, perpendiculaire à la direction longitudinale. L'étirage est ainsi bidirectionnel, afin de garantir une répartition homogène de la matière ainsi qu'une bonne orientation des chaînes moléculaires.

Une seconde opération, dite de soufflage, consiste à injecter un fluide sous haute pression, généralement supérieure à 25 bars, et couramment comprise entre 30 et 35 bars. L'opération de soufflage permet de plaquer la bulle formée par la préforme en matière plastique contre les parois du moule, et ainsi de former un récipient présentant une forme souhaitée et bien définie.

La phase de présoufflage est primordiale dans le développement du plastique de la préforme, et dans l'orientation des chaînes moléculaires. Un défaut de présoufflage entraîne une mauvaise répartition de la matière, et ainsi aboutit à des récipients défectueux car fragilisés. Dans un contexte de production industrielle à cadence élevée, le présoufflage doit être maîtrisé afin de garantir la qualité des récipients formés à partir de préformes en matière plastique. Il est connu de WO2013178903 de réguler la production cyclique de récipients d'une machine comprenant des stations d'étirage soufflage à partir de points de référence de pression régnant à l'intérieur de la préforme en fonction du temps relevés au cours du présoufflage sur une station dite station de référence. Les points de référence de pression en fonction du temps sont utilisés pour la régulation de la machine, afin de modifier les réglages d'une station dont la pression mesurée à un temps donné, ou le temps pour atteindre une pression donnée, serait en dehors d'une zone de tolérance autour de la pression de référence ou du temps de référence pour ce point.

On connait également le document US2010176528 qui décrit un procédé et une machine dans lequel le début du présoufflage est régulé.

Il arrive qu'un opérateur impose le changement d'un ou de plusieurs paramètres de fonctionnement de la machine, par exemple lorsque de nouvelles préformes sont utilisées présentant des caractéristiques différentes en termes de composition, ou de température de chauffe avant présoufflage.

Cependant, la modification d'un paramètre de fonctionnement de la machine en cours de production entraîne un arrêt de la régulation et la production cyclique de récipients continue sans régulation. Il est alors nécessaire de reprendre des points de référence manuellement pour que la régulation puisse reprendre.

Il en résulte une dérive de la phase de présoufflage, ainsi qu'une diminution de productivité.

Il existe donc un besoin d'améliorer le fonctionnement de la machine lorsqu'un opérateur perturbe le système de régulation.

A cet effet, la présente invention a pour objet un procédé de régulation d'une production cyclique de récipients par étirage-soufflage à partir de préformes en matière plastique dans une machine comprenant une ou plusieurs stations d'étirage-soufflage conçues chacune pour produire un récipient au cours d'un cycle de production, et pourvues chacune d'une électrovanne de présoufflage raccordant fluidiquement la préforme à une source de fluide sous pression fournissant un débit de présoufflage pendant une phase de présoufflage, le procédé de régulation comprenant :

a) une phase d'initialisation incluant une étape de mise en place par un opérateur et de mémorisation d'une pluralité de paramètres de fonctionnement de la machine (1) pendant le cycle de production, et de paramètres de régulation incluant au moins une position de référence (Ac, Bc, PCab, Fc) d'au moins un point caractéristique (A, B, Pab, F) d'une courbe de présoufflage correspondant à la pression régnant à l'intérieur de la préforme durant au moins une partie du présoufflage, ladite position de référence (Ac, Bc, PCab, Fc) étant déterminée par un instant de référence et/ou une pression de référence,

b) une phase de production régulée au cours de laquelle, pour chaque cycle de production, au moins une préforme est étirée et soufflée par injection d'un fluide sous pression dans chaque station et au cours de laquelle :

- b1) pour au moins une station de référence de la machine, la courbe de présoufflage incluant le point caractéristique est mesurée et mémorisée, et un instant réel et/ou une pression réelle est calculé(e) ou déterminé(e), correspondant audit point caractéristique (A, B, Pab, F) pour la courbe de présoufflage mesurée, et
- b2) une nouvelle valeur d'au moins un paramètre de fonctionnement de la machine est calculée et mémorisée en fonction d'un écart entre l'instant réel et l'instant de référence et/ou entre la pression réelle et la pression de référence,

le procédé de régulation étant caractérisé en ce que la phase de production régulée inclut une étape de surveillance b3) d'un éventuel changement imposé par l'opérateur d'une valeur d'un paramètre de fonctionnement de la machine,

le procédé de régulation comprenant en outre une phase de mise à jour automatique du ou des paramètres de régulation qui est mise en oeuvre en cas de changement imposé d'un paramètre de fonctionnement de la machine, incluant :

c1) une étape de stabilisation au cours de laquelle la production est poursuivie à partir du paramètre imposé pendant une durée de stabilisation prédéterminée, et pour chaque cycle de production les actions b1) sont exécutées, et les actions b2) sont suspendues, et

c2) une étape de correction de l'instant de référence et/ou de la pression de référence en fonction des valeurs d'instant réel et/ou de pression réelle mémorisées au cours de l'étape de stabilisation, afin de poursuivre la phase de production régulée.

Grâce à la phase de mise à jour automatique du ou des paramètres de régulation, le procédé selon l'invention permet de poursuivre la régulation en cas de changement imposé d'un paramètre de fonctionnement de la machine. Il n'est plus nécessaire de reprendre manuellement des points de référence.

Selon d'autres caractéristiques du procédé prises isolément ou selon toute combinaison techniquement envisageable :

- les paramètres de fonctionnement de la machine susceptibles d'être recalculés pendant l'étape b2) sont pris parmi : un instant de commande d'ouverture (TRo) de l'électrovanne de présoufflage, une valeur ou un profil temporel de débit de présoufflage, une pression de présoufflage ou un profil temporel d'une course d'une tige d'étirage,

- les paramètres de régulation incluent la mémorisation d'au moins une tolérance d'acceptation d'une position réelle (Ar, Br, PRab, Fr) de l'au moins un point caractéristique (A, B, Pab, F) de la courbe de présoufflage choisi par rapport à la position de référence dudit point caractéristique (A, B, Pab, F), et dans lequel il n'y a pas de calcul d'une nouvelle valeur dudit paramètre de fonctionnement de la machine (1) si ledit écart est inférieur à la tolérance d'acceptation.

Ainsi, en cas d'un écart faible entre l'instant réel et l'instant de référence et/ou entre la pression réelle et la pression de référence, la valeur du paramètre de fonctionnement de la machine dont le changement a été imposé est conservée sans impacter de manière trop importante la productivité de la machine.

Selon d'autres caractéristiques du procédé prises isolément ou selon toute combinaison techniquement envisageable :

- les paramètres de régulation comprennent un instant de référence (Ac) du début d'augmentation de pression dans la préforme, appelé instant de référence (Ac) de début de présoufflage, et une tolérance pour l'instant de référence (Ac) de début de présoufflage,
et, si l'instant réel (Ar) de début de présoufflage dans la préforme de la station de référence est postérieur, respectivement antérieur, d'un écart temporel à l'instant de référence (Ac) de début de présoufflage pour ladite station de référence supérieur à la tolérance d'acceptation, la nouvelle valeur calculée comme instant de commande d'ouverture (TRo) de l'électrovanne de présoufflage de chacune des stations d'étirage-soufflage est alors anticipée, respectivement retardée, dudit écart temporel dans toutes les stations d'étirage-soufflage.

- les paramètres de régulation incluent en outre :
un instant de référence (Bc) d'un pic de pression de présoufflage dans la préforme, et une tolérance d'acceptation pour l'instant de référence (Bc) du pic de pression, dans lequel la phase de production régulée b) comprend d'abord un éventuel changement imposé de l'instant de commande d'ouverture (TRo) de l'électrovanne de présoufflage jusqu'à un cycle de production au cours duquel l'instant réel (Ar) de début de présoufflage dans la préforme est inférieur à la tolérance d'acceptation de début de présoufflage, un instant réel (Br) de pic de pression est calculé pour les cycles de production suivants, et si ce dernier est antérieur, respectivement postérieur, à l'instant de référence (Bc) de pic de pression, d'un écart temporel supérieur à la tolérance d'acceptation, est calculée une nouvelle valeur de débit de présoufflage (Dp) réduite, respectivement augmentée par rapport à la valeur du débit de présoufflage (Dp) au cours du cycle de production pendant lequel l'instant réel (Br) de pic de pression a été calculé.

- les paramètres de régulation incluent en outre une pente de référence (PCab) d'augmentation de la pression entre le point caractéristique (A) de début de présoufflage et le point caractéristique (B) de pic de pression, et une tolérance d'acceptation pour ladite pente de référence (PCab) d'augmentation de la pression,

dans lequel la phase de production régulée comprend d'abord l'éventuel changement imposé de l'instant de commande d'ouverture (TRo) de l'électrovanne de présoufflage jusqu'à un cycle de production au cours duquel l'instant réel (Ar) de début de présoufflage dans la préforme est inférieur à la tolérance d'acceptation de début de présoufflage, puis l'éventuel changement imposé du débit de présoufflage (Dp) jusqu'à un cycle de production au cours duquel l'instant réel (Ar) de début de présoufflage et l'instant réel (Br) de pic de pression sont inférieurs à leur tolérance d'acceptation respective,

puis une pente réelle (PRab) d'augmentation de la pression entre l'instant réel (Ar) de début de présoufflage et l'instant réel (Br) de pic de pression est calculée pour les cycles de production suivants, et si la pente réelle (PRab) s'écarte de la pente de référence (PCab), d'un écart supérieur à la tolérance d'acceptation de pente, sont calculées :

* une nouvelle valeur de débit nominal de présoufflage ou un nouveau profil temporel de débit de présoufflage, et/ou
* une nouvelle valeur de pression de la source de fluide sous pression, et/ou
* une nouvelle valeur de vitesse nominale ou de profil temporel d'étirage d'une tige d'étirage.

- l'étape b1) comprend uniquement ou en outre les opérations consistant à :

détecter un instant (Ar), dit instant réel (Ar) de début de présoufflage dans la station de référence ou dans une autre station, où la pression dans la préforme commence à croître ;
mémoriser cet instant ;
calculer un instant réel de fin de présoufflage tel que :

instant réel de fin de présoufflage = instant réel de début de présoufflage $+\Delta t-\delta$, où $\Delta t$ est une durée prédéfinie d'ouverture de l'électrovanne de présoufflage, $\delta$ est une constante prédéterminée ;
en déduire une pression réelle (Fr) de fin de présoufflage à partir des mesures de pression effectuées dans l'étape b1);
comparer la pression réelle (Fr) de fin de présoufflage ainsi déterminée avec une pression de référence (Fc) de fin de présoufflage pour la station de référence ;
si la pression réelle (Fr) de fin de présoufflage s'écarte de la pression de référence (Fc)
de fin de présoufflage d'une valeur supérieure à une tolérance d'acceptation, est calculée une nouvelle valeur de débit de présoufflage (Dp) réduite, respectivement augmentée par rapport à la valeur du débit de présoufflage (Dp) au cours du cycle de production pendant lequel l'instant réel (Fr) de fin de présoufflage a été calculé.

Ainsi, en cas d'éventuel changement imposé de paramètres de fonctionnement de la machine tels que l'instant d'ouverture de l'électrovanne ou le débit de présoufflage, les paramètres de régulation de la machine sont mis à jour automatiquement dès lors qu'il n'est plus possible de rester à l'intérieur de la tolérance d'acceptation, et les paramètres de fonctionnement de la machine dont le changement n'est pas imposé sont recalculés.

Selon d'autres caractéristiques du procédé, les paramètres de régulation incluent la mémorisation d'au moins une limite de régulation pour au moins un des paramètres de fonctionnement machine (1), dit paramètre surveillé, les actions b2) de l'étape de production régulée incluent en outre de comparer la nouvelle valeur calculée pour un paramètre surveillé avec la limite de régulation, et en cas de dépassement de ladite limite, une alerte de dégradation de la régulation est émise et la production régulée se poursuit à partir d'une nouvelle valeur du paramètre surveillé prise parmi : la valeur au cours du cycle de production précédent, la valeur entrée dans la phase d'initialisation, ou une combinaison desdites valeurs.

Ainsi, la valeur du paramètre surveillé ne peut excéder une limite de régulation au-delà de laquelle la régulation serait dégradée.

Selon d'autres caractéristiques du procédé, utilisant une machine équipée d'une première station et d'une deuxième station, l'une des stations étant une station de référence, chaque station étant pourvue d'un capteur de pression régnant à l'intérieur de la préforme de ladite station et d'une électrovanne de présoufflage présentant un temps de réponse entre un instant de commande de l'ouverture (TRo) de l'électrovanne et le début effectif de l'augmentation de pression dans la préforme, procédé dans lequel les paramètres de régulation comprennent le début du présoufflage, et un temps de réponse prédéterminé, et dans lequel en plus d'une nouvelle valeur d'instant de commande (TRo) de l'ouverture de l'électrovanne de présoufflage, un temps de réponse réel est calculé,
si le temps de réponse réel est supérieur au temps de réponse prédéterminé :

une alerte de dérive de la station de référence est émise, et/ou
pour un cycle de production ultérieur, l'instant de référence d'ouverture de l'électrovanne (17) de la deuxième station est calculé, la deuxième station étant alors considérée comme une nouvelle station de référence.

Ainsi, en cas de temps de réponse trop long par exemple dû au vieillissement de l'électrovanne de présoufflage de la station de référence et faussant la référence de régulation, l'émission d'une alerte d'une dérive de la station de référence, et/ou la détermination d'une nouvelle station qui servira de station de référence pour les prochains cycles de production, permet d'éviter des erreurs de régulation.
La présente invention a également pour objet une machine de production cyclique par étirage-soufflage à partir de préformes en matière plastique , qui comprend : une source de fluide à une pression de présoufflage, une ou plusieurs stations d'étirage-soufflage, chaque station comprenant un moule présentant une cavité destinée à recevoir une préforme; une électrovanne propre à mettre en communication l'intérieur de la préforme, reçue dans la cavité, avec ladite source de fluide selon un débit de présoufflage (Dp) prédéterminé; un dispositif de commande de l'ouverture et de la fermeture de l'électrovanne; un capteur propre à mesurer la pression régnant à l'intérieur de la préforme; un dispositif de détection d'un instant, dit instant réel (Ar) de début de présoufflage, où la pression dans la préforme commence à croître; un dispositif de comparaison de cet instant réel (Ar) avec un instant de référence (Ac) de début de présoufflage; un dispositif de régulation d'un instant de commande d'ouverture (TRo) de l'électrovanne en fonction du résultat de cette comparaison,
caractérisée en ce qu'elle comprend un dispositif de surveillance d'un éventuel changement imposé par l'opérateur d'un paramètre de fonctionnement de la machine, un dispositif d'analyse d'une succession de courbes temporelles de pression régnant à l'intérieur de la préforme au cours d'une phase de stabilisation sans régulation, et un dispositif de mise à jour d'au moins une référence de régulation, raccordés au dispositif d'analyse.
La machine permet de mettre en oeuvre un procédé selon l'invention en étant configurée pour détecter un éventuel changement imposé par un opérateur, analyser une succession de courbes temporelles de pression au cours d'une phase de stabilisation sans régulation et mettre à jour au moins une référence de régulation. Ainsi, la machine peut poursuivre la régulation sans nécessiter l'intervention d'un opérateur pour mettre à jour la référence de régulation.
Selon d'autres caractéristiques de la machine selon l'invention, prises seules ou en combinaison :

- la machine précitée comprend en outre un dispositif commandable apte à faire varier le débit de fluide sous pression, ou une électrovanne à débit variable commandable; un dispositif de détection d'un instant où la pression dans la préforme atteint un pic, dit instant réel (Br) de pic de pression de présoufflage ; un dispositif de comparaison de cet instant réel (Br) de pic de pression avec un instant de référence (Bc) de pic de pression; un dispositif de régulation du débit injecté dans la préforme en fonction du résultat de cette comparaison.

- la machine précitée comprend en outre un dispositif de calcul d'une pente réelle (PRab) d'augmentation de la pression entre la pression mesurée à l'instant réel (Ar) début de présoufflage et la pression mesurée à l'instant réel de (Br) de pic de pression; un dispositif de comparaison de cette pente réelle (PRab) avec une pente de référence (PCab) ; un dispositif de régulation du débit (Dp) de présoufflage injecté dans la préforme en fonction du résultat de cette comparaison et/ou un dispositif de régulation de la pression de la source de fluide sous pression en fonction du résultat de cette comparaison, et/ou un dispositif de régulation de vitesse nominale ou de profil temporel d'étirage d'une tige d'étirage en fonction du résultat de cette comparaison.

- la machine précitée comprend en outre un dispositif de détection d'un instant, dit instant réel de fin de présoufflage, où la pression dans la préforme recommence à croître ; un dispositif de comparaison de la pression réelle (Fr) de fin de présoufflage mesurée à cet instant avec une pression de référence (Fc) de fin de présoufflage ; un dispositif de régulation du débit de présoufflage (Dp) injecté dans la préforme en fonction du résultat de cette comparaison.

Ainsi, la machine est configurée pour poursuivre la régulation quelle que soit l'issue de la comparaison entre l'instant de référence et l'instant réel de début de présoufflage, entre l'instant de référence et l'instant réel de pic de pression, entre la pente de référence et la pente réelle d'augmentation de la pression entre le début de présoufflage et le pic de pression, et entre l'instant de référence et l'instant réel de fin de présoufflage.

La présente invention a également pour objet :

- un produit programme d'ordinateur destiné à être implémenté sur une machine de fabrication de récipients précitée, qui comprend des instructions pour commander l'ouverture et la fermeture de l'électrovanne de présoufflage ; commander le débit de présoufflage (Dp); prendre en compte l'instant réel (Ar) de début de présoufflage ; prendre en compte l'instant de référence (Ac) de début de présoufflage ; comparer l'instant réel (Ar) de début de présoufflage avec l'instant de référence (Ac) de début de présoufflage ; réguler l'instant de commande d'ouverture (TRo) de l'électrovanne en fonction du résultat de cette comparaison, caractérisé en ce qu'il comprend des instructions pour la détection d'au moins un changement imposé par l'opérateur d'un paramètre de fonctionnement de la machine;

   des instructions pour mesurer une série de courbes de présoufflage et mémoriser au moins les positions réelles des points caractéristiques d'une série de courbes de présoufflage, et suspendre la modification des paramètres de fonctionnement de la machine (1) pendant une durée de stabilisation prédéterminée, et
   des instructions pour mettre à jour au moins un paramètre de régulation et autoriser de nouveau une production régulée.

- un produit programme d'ordinateur selon la revendication précédente, comprenant en outre des instructions pour prendre en compte un instant réel (Br) de pic de pression de présoufflage dans la préforme; prendre en compte un instant de référence (Bc) de pic de pression de présoufflage dans la préforme; comparer l'instant réel (Br) de pic de pression de présoufflage dans la préforme avec l'instant de référence (Bc) de pic de pression de présoufflage dans la préforme; réguler le débit de présoufflage (Dp) en fonction du résultat de cette comparaison ;

   et/ou pour calculer une pente réelle (PRab) entre la pression mesurée à l'instant réel (Ar) de début de présoufflage dans la préforme et la pression mesurée à l'instant réel (Br) de pic de pression de présoufflage; calculer une pente de référence (PCab) entre la pression mesurée à l'instant de référence (Ac) de début de présoufflage dans la préforme et la pression mesurée à l'instant de référence (Bc) de pic de pression de présoufflage; comparer la pente réelle (PRab) avec la pente de référence (PCab); réguler le débit de présoufflage (Dp) en fonction du résultat de cette comparaison et/ou la pression de la source de fluide sous pression, et/ou la vitesse nominale ou le profil temporel d'étirage de la tige d'étirage;
   et/ou pour prendre en compte une pression réelle (Fr) de fin de présoufflage ; prendre en compte une pression de référence (Fc) de fin de présoufflage ; comparer la pression réelle (Fr) de fin de présoufflage avec la pression de référence (Fc) de fin de présoufflage; réguler le débit de présoufflage (Dp) en fonction du résultat de cette comparaison.

Le produit programme d'ordinateur est adapté pour mettre en oeuvre le procédé selon l'invention, et permet notamment d'automatiser la mise à jour d'au moins un paramètre de régulation en autorisant de nouveau une production régulée. La mise à jour est ainsi mise en oeuvre avec une précision et une rapidité accrue limitant la diminution de productivité et des erreurs éventuelles de régulation.

L'invention porte également sur une machine de production cyclique par étirage-soufflage à partir de préformes en matière plastique, qui comprend : une source de fluide à une pression de présoufflage, une ou plusieurs stations d'étirage-soufflage, chaque station comprenant un moule présentant une cavité destinée à recevoir une préforme; une électrovanne propre à mettre en communication l'intérieur de la préforme, reçue dans la cavité, avec ladite source de fluide selon un débit de présoufflage prédéterminé ; un dispositif de commande de l'ouverture et de la fermeture de l'électrovanne; un capteur propre à mesurer la pression régnant à l'intérieur de la préforme; un dispositif de détection d'une portion réelle de courbe de présoufflage correspondant à une zone caractéristique prédéterminée ; un dispositif de comparaison de cette courbe réelle avec un gabarit de référence correspondant à la zone caractéristique prédéterminée ; un dispositif de régulation d'un instant de commande d'ouverture de l'électrovanne en fonction du résultat de cette comparaison, la machine comprenant un dispositif de surveillance d'un éventuel changement imposé par l'opérateur d'un paramètre de fonctionnement de la machine, un dispositif d'analyse d'une succession de courbes temporelles de pression régnant à l'intérieur de la préforme au cours d'une phase de stabilisation sans régulation, et un dispositif de mise à jour, raccordés au dispositif d'analyse le dispositif de mise à jour étant conçu pour mettre à jour le gabarit de référence.

L'invention sera mieux comprise à la lecture de la description qui va suivre, donnée uniquement à titre d'exemple et faite en se référant aux dessins annexés sur lesquels :

**[Fig. 1]** la figure 1 est une vue schématique illustrant une machine de production cyclique de récipients par étirage-soufflage, et plus spécifiquement un moule d'une station d'étirage-soufflage dans lequel est soufflé un récipient (en traits pleins) à partir d'une préforme (en pointillés) ;

**[Fig. 2]** la figure 2 est une courbe illustrant les variations de la pression régnant à l'intérieur de la préforme au cours du présoufflage ;;

**[Fig. 3]** la figure 3 représente un diagramme schématique du procédé de régulation selon l'invention ;

**[Fig. 4]** la figure 4 représente deux courbes illustrant la régulation de la machine à l'aide d'un point de référence du début de présoufflage ;

**[Fig. 5]** la figure 5 représente deux courbes illustrant la régulation de la machine à l'aide d'un point de référence de pic de pression et de la pente de la courbe entre le point de début de présoufflage et de pic de pression ;

**[Fig. 6]** la figure 6 représente deux courbes illustrant la régulation de la machine à l'aide d'un point de référence de fin de présoufflage ;

**[Fig. 7]** la figure 7 est une courbe illustrant les variations de la pression régnant à l'intérieur de préformes d'une pluralité de stations d'étirage-soufflage sans régulation au cours du présoufflage ; et

**[Fig. 8]** la figure 8 est une courbe illustrant les variations de la pression régnant à l'intérieur de préformes d'une pluralité de stations d'étirage-soufflage avec régulation au cours du présoufflage.

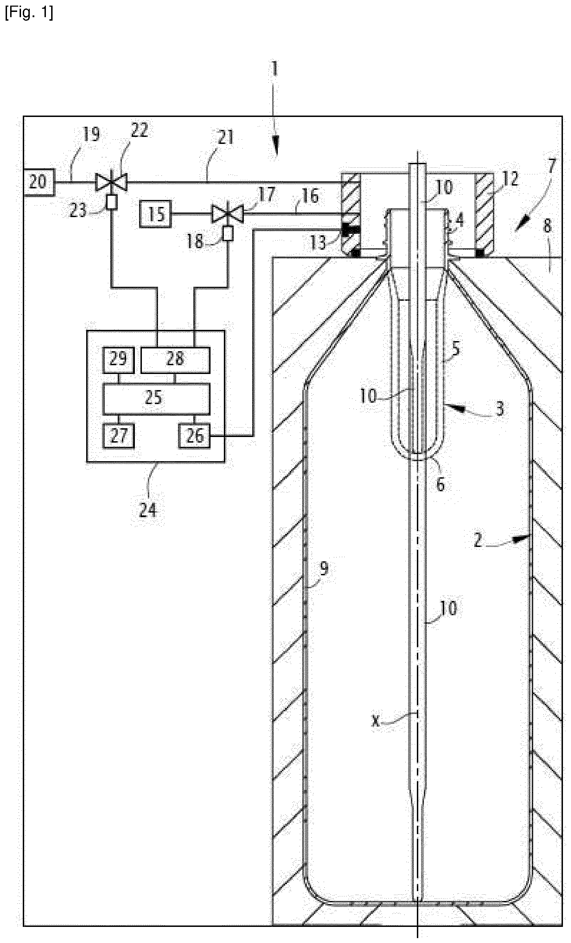

La figure 1 représente partiellement une machine **1** de production cyclique de récipients **2** par étirage-soufflage à partir de préformes **3** en matière plastique.

Les préformes 3 sont par exemple réalisées en polyéthylène téréphtalate (PET).

Chaque préforme 3 comprend un col **4** et un corps **5** cylindrique terminé par un fond 6 hémisphérique.

La machine 1 comprend au moins une station **7** d'étirage-soufflage, une seule station 7 étant représentée sur la figure 1. Chaque station 7 est typiquement montée sur un bâti, par exemple en périphérie d'un carrousel.

La station 7 comprend un moule **8** présentant une cavité **9** destinée à recevoir une préforme 3, et présentant la forme du récipient à réaliser.

La station 7 comprend de préférence une tige **10** d'étirage montée coulissante par rapport au moule 8 le long d'un axe **X** principal (généralement de révolution).

La station 7 comprend un dispositif (non représenté) de commande du déplacement axial de la tige 10, de préférence du type électromagnétique.

La station 7 comprend une tuyère **12** coiffant une face supérieure du moule 8, propre à recouvrir le col 4 de la préforme 3 qui en dépasse.

La station 7 comprend un capteur **13** de pression, typiquement monté sur la tuyère 12 propre à mesurer la pression régnant à l'intérieur de la préforme 3.

La machine 1 comprend par ailleurs un circuit **14** de présoufflage comprenant une source **15** de fluide de présoufflage. Le fluide de présoufflage est par exemple un gaz, de préférence de l'air. Le fluide de présoufflage est mis à une pression de présoufflage, typiquement comprise entre 5 et 16 bars. Le circuit 14 de présoufflage comprend un conduit **16** reliant la source de fluide 15 à la tuyère 12. Une électrovanne **17** de présoufflage est interposée entre la source 15 de fluide et la tuyère 12. Un dispositif **18** commandable apte à faire varier le débit Dp de fluide sous pression est de préférence monté sur l'électrovanne de présoufflage 17, ou l'électrovanne de présoufflage 17est à débit variable commandable. L'électrovanne 17 de présoufflage est propre à mettre en communication l'intérieur de la préforme 3, reçue dans la cavité 9, avec ladite source 15 de fluide selon un débit de présoufflage **Dp** prédéterminé. Le débit de présoufflage est typiquement mesuré à l'aide d'un débitmètre.

Par phase de présoufflage, il est entendu une phase pendant au moins une partie de laquelle la tige d'étirage 10 étire la préforme 3, et au cours de laquelle la préforme 3 est fluidiquement raccordée par l'électrovanne de présoufflage 17 à la source 15 de fluide de présoufflage.

La machine 1 comprend en outre un circuit **19** de soufflage comprenant une source **20** de fluide de soufflage. Le fluide de soufflage est par exemple un gaz, de préférence de l'air. Le fluide de soufflage est mis à une pression de soufflage, typiquement comprise entre 16 et 40 bars. Le circuit 19 de soufflage comprend un conduit **21** reliant la source 20 de fluide de soufflage à la tuyère 12. Une électrovanne **22** de soufflage est interposée entre la source 20 de fluide de soufflage et la tuyère 12. Un dispositif 23 commandable apte à faire varier le débit **Ds** de fluide sous pression est de préférence monté sur l'électrovanne 22 de soufflage, ou l'électrovanne 22 de soufflage est à débit variable commandable.

La machine 1 comprend en outre un dispositif de commande de l'ouverture et de la fermeture de l'électrovanne de présoufflage 17.

De préférence, la machine 1 comprend en outre un dispositif de commande de l'ouverture et de la fermeture de l'électrovanne 22 de soufflage.

La machine 1 comprend en outre une unité **24** de contrôle électronique, notamment sous forme d'un automate programmable industriel (API), reliée électriquement au capteur 13 de pression, aux électrovannes 17, 22 via leurs des dispositifs 18, 23 commandables pour réguler les débits respectifs, et le cas échéant au dispositif de commande du déplacement de la tige 10.

Plus précisément, l'unité 24 de contrôle comprend typiquement :

- un processeur **25,**
- un module **26** d'entrée analogique relié au capteur 13 de pression pour en recueillir les mesures et les convertir en signal numérique pour traitement par le processeur 25,
- une mémoire **27** reliée au processeur 25 pour le stockage de données issues du capteur 13 de pression après conversion,
- un module **28** de sortie analogique commandé par le processeur 25, et contrôlant les électrovannes 17,22 via leurs dispositifs 18, 23 commandables aptes à faire varier le débit de fluide sous pression, de manière à moduler les débits Dp, Ds de fluide fourni à la tuyère 12, ainsi que par les dispositifs de commande de l'ouverture et de la fermeture des électrovannes 17,22, de manière à ouvrir ou fermer les électrovannes 17, 23. Le module 28 de sortie analogique contrôle le cas échéant le dispositif de commande de déplacement axial de la tige 10.
- une interface **29** de communication pour l'implémentation dans l'unité 24 de contrôle d'un programme d'ordinateur régentant son fonctionnement. Pour la réalisation concrète de la tuyère 12 et l'intégration des électrovannes 17, 22 avec les dispositifs 18, 23 commandables aptes à faire varier le débit, il est possible de se référer à la demande FR 2 872 082 de la demanderesse ou à son équivalent international WO 2006/008380.

La machine 1 comprend en outre un dispositif de surveillance d'un éventuel changement imposé par l'opérateur d'un paramètre de fonctionnement de la machine 1, un dispositif d'analyse d'une succession de courbes temporelles de pression régnant à l'intérieur de la préforme 3 au cours d'une phase de stabilisation sans régulation, et un dispositif de mise à jour d'au moins une référence de régulation, raccordés au dispositif d'analyse.

Le dispositif de surveillance d'un éventuel changement imposé comprend typiquement le processeur 25.

Le dispositif d'analyse d'une succession de courbes temporelles de pression régnant à l'intérieur de la préforme au cours d'une phase de stabilisation sans régulation comprend typiquement le processeur 25, le module 26 d'entrée analogique relié au capteur 13 de pression pour en recueillir les mesures et les convertir en signal numérique pour traitement par le processeur 25, et la mémoire 27 reliée au processeur 25 pour le stockage de données issues du capteur 13 de pression après conversion.

Le dispositif de mise à jour d'au moins une référence de régulation comprend typiquement le processeur 25 et le module 28 de sortie analogique commandé par le processeur 25.

Le dispositif de mise à jour est propre à mettre à jour au moins une référence de régulation en fonction de l'analyse de la succession de courbes temporelles de pression au cours de la phase de stabilisation sans régulation.

Le dispositif de surveillance, le dispositif d'analyse et le dispositif de mise à jour permettent de poursuivre la régulation de la production cyclique de récipients même après le changement d'un paramètre de fonctionnement de la machine 1.

De préférence, la machine 1 comprend en outre un dispositif de détection d'un instant, dit instant réel de début de présoufflage **Ar,** où la pression dans la préforme 3 commence à croître.

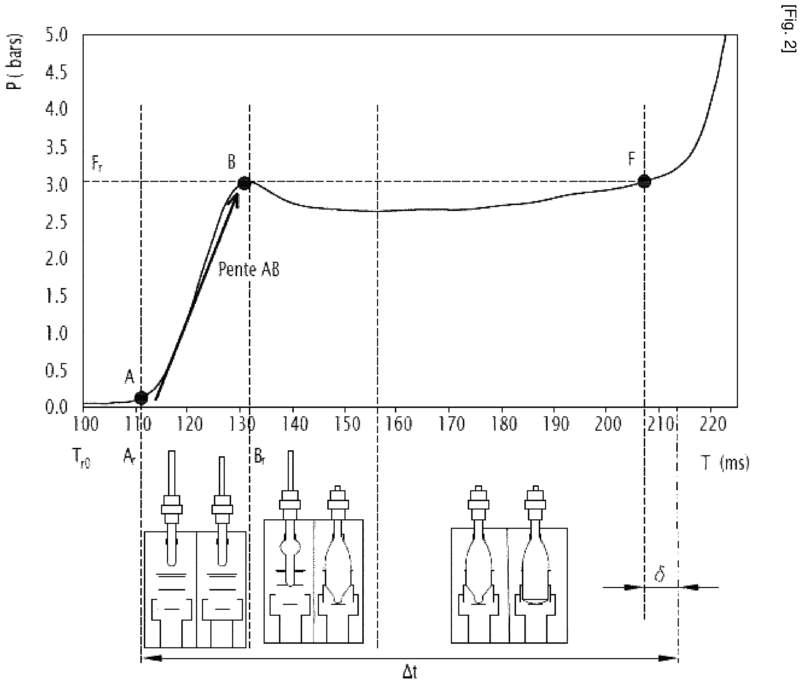

Comme cela est visible sur la figure 2, l'instant de début de présoufflage est un point caractéristique **A** d'une courbe de présoufflage correspondant à la pression régnant à l'intérieur de la préforme 3 durant au moins une partie du présoufflage.

Le dispositif de détection de l'instant réel Ar de début de présoufflage comprend typiquement le processeur 25, apte à détecter l'instant réel Ar à partir des données recueillies par le capteur 13 de pression, converties par le module 26 d'entrée analogique et mémorisées par la mémoire 27

Selon ce mode de réalisation, la machine 1 comprend typiquement en outre un dispositif de comparaison de l'instant réel Ar de début de présoufflage avec un instant de référence **Ac** de début de présoufflage, et un dispositif de régulation d'un instant de commande d'ouverture TRo de l'électrovanne 17 de présoufflage en fonction du résultat de cette comparaison.

L'instant de référence Ac est déterminé et réglé par un opérateur en fonction d'un procédé de production d'un récipient selon les caractéristiques souhaitées pour le récipient final.

L'instant réel Ar de début de présoufflage peut différer de l'instant de référence Ac de début de présoufflage lorsque l'ouverture de l'électrovanne 17 de présoufflage intervient trop tôt auquel cas l'instant réel Ar de début de présoufflage est anticipé par rapport à l'instant de référence Ac de début de présoufflage, ou trop tard auquel cas l'instant réel Ar de début de présoufflage est retardé par rapport à l'instant de référence Ac de début de présoufflage. Le dispositif de comparaison de l'instant réel Ar de début de présoufflage avec un instant de référence Ac de début de présoufflage comprend typiquement le processeur 25, apte à comparer les données dudit instant réel Ar avec les données dudit instant de référence Ac enregistrées par la mémoire 27.

Le dispositif de régulation de l'instant de commande d'ouverture TRo de l'électrovanne 17 de présoufflage en fonction du résultat de cette comparaison comprend typiquement le processeur 25, apte à commander le module 28 de sortie analogique contrôlant l'électrovanne de présoufflage 17 via le dispositif de commande de l'ouverture et de la fermeture de l'électrovanne de présoufflage 17.

De préférence, la machine 1 comprend en outre un dispositif de détection d'un instant réel de pic de pression **Br** où la pression dans la préforme 3 atteint un pic.

L'instant de pic de pression est un point caractéristique **B** de la courbe de présoufflage.

Le dispositif de détection de l'instant réel Br de pic de pression comprend typiquement le processeur 25, apte à détecter l'instant réel Br à partir des données recueillies par le capteur 13 de pression, converties par le module 26 d'entrée analogique et mémorisées par la mémoire 27

Selon ce mode de réalisation, la machine 1 comprend typiquement en outre un dispositif de comparaison de l'instant réel Br de pic de pression avec un instant de référence **Bc** de pic de pression, et un dispositif de régulation du débit Dp injecté dans la préforme 3 en fonction du résultat de cette comparaison.

L'instant de référence Bc est déterminé et réglé par un opérateur en fonction d'un procédé de production d'un récipient selon les caractéristiques souhaitées pour le récipient final.

L'instant réel Br de pic de pression peut différer de l'instant de référence Bc de pic de pression lorsque le débit Dp de fluide de présoufflage est trop élevé auquel cas l'instant réel Br de pic de pression est anticipé par rapport à l'instant de référence Bc de pic de pression, ou trop faible auquel cas l'instant réel Br de pic de pression est retardé par rapport à l'instant de référence Bc de pic de pression.

Le dispositif de comparaison de l'instant réel Br de pic de pression avec un instant de référence Bc de pic de pression comprend typiquement le processeur 25, apte à comparer les données dudit instant réel Br avec les données dudit instant de référence Bc enregistrées par la mémoire 27.

Le dispositif de régulation du débit de présoufflage Dp injecté dans la préforme 3 en fonction du résultat de cette comparaison comprend typiquement le processeur 25, apte à commander le module 28 de sortie analogique contrôlant l'électrovanne de présoufflage 17 via le dispositif 18 commandable apte à faire varier le débit de fluide sous pression injecté dans la préforme 3, de manière à moduler le débit de présoufflage Dp.

De préférence, la machine 1 comprend en outre un dispositif de calcul d'une pente réelle **PRab** d'augmentation de la pression entre la pression mesurée à l'instant réel Br de pic de pression et la pression mesurée à l'instant réel Ar de début de présoufflage.

La valeur de la pente réelle PRab dépend ainsi de l'instant réel Ar de début de présoufflage, de l'instant réel Br de pic de pression et des valeurs de pression mesurées à ces instants.

Le dispositif de calcul de la pente réelle PRab comprend typiquement le processeur 25, apte à calculer la pente réelle entre les points caractéristiques **A** de début de présoufflage et **B** de pic de pression mesurés par le capteur 13 de pression, convertis par le module 26 d'entrée analogique et mémorisés par la mémoire 27.

La pente entre la pression mesurée à l'instant de pic de pression et la pression mesurée à l'instant de début de présoufflage est un point caractéristique **Pab** de la courbe de présoufflage. La courbe temporelle de pression entre le début du présoufflage et le pic de pression n'étant pas rectiligne, le calcul de la pente réelle PRab est calculée d'une manière prédéterminée prise parmi les nombreuses options disponibles à l'homme du métier, telle qu'une moyenne des dérivées, ou une moyenne des augmentations de la pression par incrément temporels identiques, etc...

Selon ce mode de réalisation, la machine 1 comprend typiquement en outre un dispositif de comparaison de la pente réelle PRab avec une pente de référence **PCab** d'augmentation de la pression, et un dispositif de régulation du débit Dp injecté dans la préforme 3 en fonction du résultat de cette comparaison.

Le dispositif de comparaison de la pente réelle PRab avec une pente de référence PCab comprend typiquement le processeur 25, apte à comparer les données de ladite pente réelle PRab avec les données de ladite pente de référence PCab enregistrées par la mémoire 27.

Le dispositif de régulation du débit Dp injecté dans la préforme 3 en fonction du résultat de cette comparaison comprend typiquement le processeur 25, apte à commander le module 28 de sortie analogique contrôlant l'électrovanne de présoufflage 17 via le dispositif commandable18 apte à faire varier le débit de fluide sous pression injecté dans la préforme 3, de manière à moduler le débit de présoufflage Dp.

De préférence, la machine 1 comprend en outre un dispositif de détection d'un instant, dit instant réel de fin de présoufflage, où la pression dans la préforme 3 recommence à croître après le creux de pression. Cette augmentation est due au fait que, passée une temporisation, pendant laquelle l'électrovanne 17 de présoufflage est maintenue ouverte, le soufflage est lancé en commandant simultanément la fermeture de l'électrovanne 17 de présoufflage et l'ouverture de l'électrovanne 22 de soufflage, ce qui provoque une brusque augmentation de la pression dans la préforme 3.

Le dispositif de détection de l'instant réel de fin de présoufflage comprend typiquement le processeur 25, apte à détecter l'instant réel de fin de présoufflage à partir des données recueillies par le capteur 13 de pression, converties par le module 26 d'entrée analogique et mémorisées par la mémoire 27.

L'instant réel de fin de présoufflage est typiquement déterminé de la façon suivante:

**[Math 1]**

$$instant\ réel\ de\ fin\ de\ présoufflage\ =\ instant\ réel\ de\ début\ de\ présoufflage\ + \Delta t - \delta$$

où : $\Delta t$ est une durée prédéfinie d'ouverture de l'électrovanne de présoufflage 17, et $\delta$ est une constante prédéterminée correspondant au temps de réponse de l'électrovanne 22 de soufflage entre l'instant de commande d'ouverture et l'instant de son ouverture effective.

$\Delta t$ est typiquement comprise entre 50 et 300 ms

$\delta$ est typiquement égale à 10 ms.

L'instant de fin de présoufflage est un point caractéristique F de la courbe de présoufflage.

Selon ce mode de réalisation, la machine 1 comprend typiquement en outre un dispositif de comparaison d'une pression réelle **Fr** de fin de présoufflage correspondant à la pression mesurée à l'instant réel de fin de présoufflage détecté, avec une pression de référence **Fc** de fin de présoufflage, et un dispositif de régulation du débit Dp injecté dans la préforme 3 en fonction du résultat de cette comparaison.

La pression de référence Fc est déterminée et réglée par un opérateur en fonction d'un procédé de production d'un récipient selon les caractéristiques souhaitées pour le récipient final.

L'instant réel Fr de fin de présoufflage peut différer de l'instant de référence Fc de fin de présoufflage lorsque le débit Dp de fluide de présoufflage est trop élevé auquel cas la pression réelle Fr de fin de présoufflage est supérieure à la pression de référence Fc de fin de présoufflage, ou trop faible auquel cas la pression réelle Fr de fin de présoufflage est inférieure à la pression de référence Fc de fin de présoufflage.

Le dispositif de comparaison de l'instant réel comprend typiquement le processeur 25, apte à comparer les données de ladite pression réelle Fr avec les données de ladite pression de référence Fc mémorisées par la mémoire 27.

Le dispositif de régulation du débit de présoufflage Dp injecté dans la préforme 3 en fonction du résultat de cette comparaison comprend typiquement le processeur 25, apte à commander le module 28 contrôlant l'électrovanne de présoufflage 17 qui peut être réglable ou associée à un limiteur de débit réglable via le dispositif 18 commandable apte à faire varier le débit de fluide sous pression injecté dans la préforme 3, de manière à moduler le débit de présoufflage Dp.

Les points caractéristiques A, B, Pab et F sont choisis pour réguler la machine 1 en assurant une bonne synchronisation de l'étirage bidirectionnel et une bonne répartition de la matière lors du présoufflage.

Un procédé de régulation d'une production cyclique de récipients par étirage-soufflage à partir de préformes 3 en matière plastique dans la machine 1 décrite ci-dessus va maintenant être décrit.

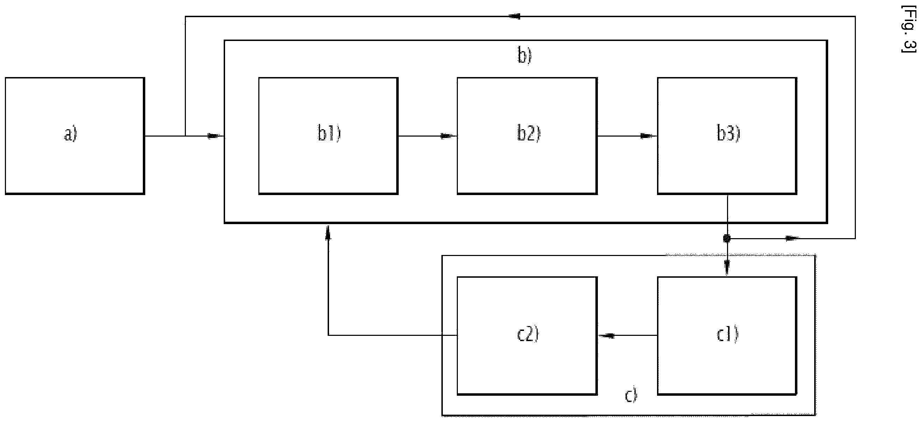

La figure 3 représente un diagramme schématique du procédé de régulation.

Le procédé comprend une phase a) d'initialisation incluant une étape de mise en place par un opérateur et de mémorisation d'une pluralité de paramètres de fonctionnement de la machine 1 pendant le cycle de production, et de paramètres de régulation incluant au moins une position de référence Ac, Bc, PCab et Fc d'au moins un point caractéristique A, B, Pab et F de la courbe de présoufflage, ladite position de référence Ac, Bc, PCab et Fc étant déterminée par un instant de référence et/ou une pression de référence. Lorsque la position de référence est déterminée par un instant de référence Ac, Bc, la position de référence correspond à un instant auquel est mesurée la pression régnant à l'intérieur de la préforme 3 audit point caractéristique A, B, ledit point caractéristique étant alors caractérisé par un instant particulier.

Lorsque la position de référence est déterminée par une pression de référence Fc, la position de référence correspond à la pression mesurée à l'instant dudit point caractéristique F, ledit point caractéristique F étant alors caractérisé par une valeur de pression particulière.

Les paramètres de fonctionnement de la machine 1 sont typiquement pris parmi : l'instant de commande d'ouverture TRo de l'électrovanne de présoufflage 17, une valeur ou un profil temporel de débit de présoufflage Dp, la pression de présoufflage ou un profil temporel d'une course de la tige 10 d'étirage.

L'instant de commande d'ouverture TRo diffère de l'instant de référence Ac de début de présoufflage car il existe un temps de réponse entre l'instant où l'ouverture de l'électrovanne de présoufflage est commandée et l'instant où le présoufflage débute effectivement à l'intérieur de la préforme 3.

La mémorisation d'une pluralité de paramètres de fonctionnement de la machine 1 pendant le cycle de production, et de paramètres de régulation est typiquement opérée par la mémoire 27.

Chaque mesure de pression est réalisée par le capteur 13 de pression de la station 7 concernée.

De préférence, chaque mesure est une moyenne de cinq mesures prises au cours de cinq cycles.

L'instant de référence Ac de début de présoufflage est typiquement déterminé par l'instant où la pression mesurée régnant à l'intérieur d'une préforme 3 commence à croître.

L'instant de référence Ac de début de présoufflage est typiquement mis en place par un opérateur à l'aide de l'interface 29 de communication dans l'unité 24 de contrôle, mémorisé par la mémoire 27, traité par le processeur 25, qui commande par le module 28 de sortie analogique le dispositif de commande de l'ouverture de l'électrovanne de présoufflage 17.

L'atteinte de l'instant de référence Ac de début de présoufflage est généralement de quelques millisecondes après l'ouverture de l'électrovanne de présoufflage 17.

L'instant de référence Bc de pic de pression est typiquement mis en place par un opérateur à l'aide de l'interface 29 de communication dans l'unité 24 de contrôle, mémorisé par la mémoire 27, traité par le processeur 25, qui commande par le module 28 de sortie analogique l' electrovanne 17 de présoufflage via le dispositif commandable 18 apte à faire varier le débit Dp de présoufflage.

L'atteinte de l'instant de référence Bc de pic de pression de présoufflage est de quelques milliseconde après l'ouverture de l'électrovanne de présoufflage 17.

La pente de référence PCab est typiquement mise en place par un opérateur à l'aide de l'interface 29 de communication dans l'unité de contrôle 24, mémorisé par la mémoire 27, traité par le processeur 25, qui commande par le module 28 de sortie analogique l' electrovanne 17 de présoufflage via le dispositif 18 commandable apte à faire varier le débit Dp de présoufflage, et/ou la valeur de pression de la source de fluide de présoufflage 15, et/ou la valeur de vitesse nominale ou de profil temporel d'étirage de la tige d'étirage 10 via le dispositif de commande de déplacement axial de la tige 10.

La pression de référence Fc de fin de présoufflage correspond typiquement à la pression à l'instant de référence de fin de présoufflage où la pression dans la préforme 3 recommence à croître.

La pression de référence Fc de fin de présoufflage est typiquement mise en place par un opérateur à l'aide de l'interface 29 de communication dans l'unité 24 de contrôle, mémorisée par la mémoire 27, traitée par le processeur 25, qui commande par le module 28 de sortie analogique l'électrovanne 17 de présoufflage via le dispositif commandable 18 apte à faire varier le débit Dp de présoufflage.

La pression de référence Fc de fin de présoufflage est généralement de quelques bars.

Le procédé comprend en outre une phase b) de production régulée comprenant une étape b1) et une étape b2).

Au cours de ladite phase de production régulée b), pour chaque cycle de production, au moins une préforme 3 est étirée et soufflée par injection d'un fluide sous pression, typiquement de la source 15 de fluide de présoufflage puis de la source 20 de fluide de soufflage dans chaque station 7.

L'injection de fluide de présoufflage est typiquement déclenchée par l'ouverture de l'électrovanne de présoufflage 17.

Le fluide de présoufflage est injecté à un débit nominal de présoufflage puis selon un profil temporel de débit de présoufflage Dp déterminé.

De préférence, simultanément à l'injection de fluide de présoufflage, la tige 10 d'étirage est mise en fonctionnement à une vitesse nominale puis selon un profil temporel d'étirage déterminé.

Par vitesse nominale de la tige d'étirage, il est entendu entre 1 m/s et 2,5 m/s.

En fin de présoufflage, l'électrovanne de présoufflage 17 est fermée, et l'injection de fluide de soufflage est typiquement déclenchée par l'ouverture de l'électrovanne 22 de soufflage.

Au cours de ladite phase de production régulée b), à l'étape b1), pour au moins une station 7 de la machine 1, dite station de référence, la courbe de présoufflage incluant le point caractéristique A, B, Pab, F est calculée à partir des mesures de pression typiquement relevées par le capteur 13 de pression et enregistrées dans la mémoire 27, puis la courbe est mémorisée, et un instant réel et/ou une pression réelle Ar, Br, PRab et Fr est calculé(e) ou déterminé(e), correspondant audit point caractéristique A, B, Pab, F pour la courbe de présoufflage mesurée.

L'instant réel Ar de début de présoufflage est détecté par le dispositif de détection de l'instant réel Ar de début de présoufflage.

L'instant réel Br de pic de pression de présoufflage est détecté par le dispositif de détection de l'instant réel Br de pic de pression de présoufflage.

La pente réelle PRab est calculée par le dispositif de calcul de pente réelle PRab entre la pression mesurée à l'instant réel Br de pic de pression et la pression mesurée à l'instant réel de début de présoufflage.

L'instant réel Fr de fin de présoufflage est détecté par le dispositif de détection de l'instant réel Fr de fin de présoufflage.

La durée totale de présoufflage pour une préforme 3 est typiquement comprise entre 50 ms et 300ms.

A l'étape b2), une nouvelle valeur d'au moins un paramètre de fonctionnement de la machine 1 est calculée et mémorisée en fonction d'un écart entre l'instant réel et l'instant de référence et/ou entre la pression réelle et la pression de référence correspondant au point caractéristique A, B, Pab, F.

La nouvelle valeur du paramètre de fonctionnement est calculée par le processeur 25 et mémorisée par la mémoire 27.

De préférence, les paramètres de régulation incluent en outre la mémorisation d'au moins une tolérance d'acceptation de la position réelle Ar, Br, PRab, Fr de l'au moins un point caractéristique A, B, Pab, F de la courbe de présoufflage choisi par rapport à la position de référence Ac, Bc, PCab, Fc dudit point caractéristique A, B, Pab, F, et il n'y a pas de calcul d'une nouvelle valeur dudit paramètre de fonctionnement de la machine 1 si ledit écart est inférieur à la tolérance d'acceptation.

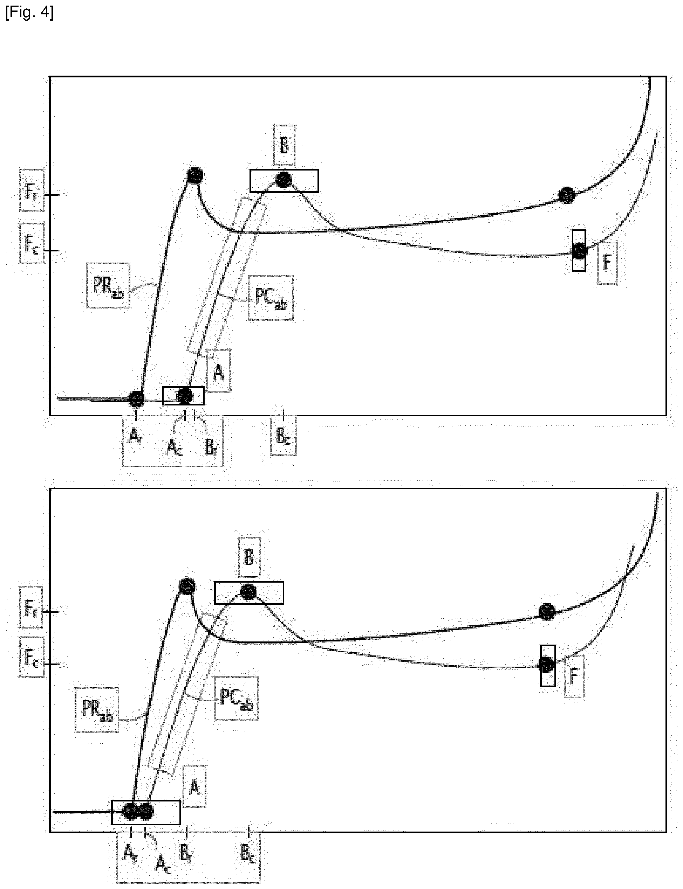

La tolérance d'acceptation autour de chaque point est représentée par des rectangles sur les figures 4 à 6.

De préférence, la tolérance d'acceptation est une tolérance d'acceptation en temps pour les points caractéristiques de début A de présoufflage et B de pic de pression de présoufflage, et une tolérance d'acceptation en pression pour le point caractéristique F de fin de présoufflage.

De préférence également, la tolérance d'acceptation pour le point caractéristique Pab est une tolérance de pente.

Par exemple, la tolérance d'acceptation pour le point caractéristique A est comprise entre 1 et 3 ms.

Par exemple, la tolérance d'acceptation pour le point caractéristique B est comprise entre 1 et 3 ms.

Par exemple, la tolérance d'acceptation pour le point caractéristique Pab est comprise entre 15 mbar/ms et 60 mbar/ms.

Par exemple, la tolérance d'acceptation pour le point caractéristique F est comprise entre 0.1 bar et 0.3 bar.

Dans chacune des figures 4 à 6, la courbe comprenant les points caractéristiques indiqués A, B, F avec des tolérances d'acceptation illustrées par des rectangles, illustre les paramètres de régulation mémorisés lors d'une phase d'initialisation du procédé. L'autre courbe de chaque figure illustre la pression réelle mesurée dans la préforme pendant la présoufflage . La figure supérieure illustre les courbes lors de l'étape « b1 » de la phase de régulation. La figure inférieure illustre l'effet de l'étape « b2 » de la phase de régulation, concernant le point caractéristique concerné par chaque figure.

Par exemple, dans le mode de réalisation illustré par la figure 4, l'instant réel Ar de début de présoufflage est comparé à l'instant de référence Ac de début de présoufflage, à l'aide du dispositif de comparaison de l'instant réel Ar de début de présoufflage avec l'instant de référence Ac de début de présoufflage.

Si l'instant réel Ar de début de présoufflage dans la préforme 3 de la station de référence mesuré à l'étape b1) est postérieur, respectivement antérieur (comme dans l'exemple de la figure 4), d'un écart temporel à l'instant de référence Ac de début de présoufflage pour ladite station de référence supérieur à la tolérance d'acceptation, la nouvelle valeur calculée à l'étape b2) comme instant de commande d'ouverture TRo de l'électrovanne de présoufflage 17 de chacune des stations d'étirage-soufflage 7 est alors anticipée, respectivement retardée (comme dans l'exemple de la figure 4), dudit écart temporel dans toutes les stations d'étirage-soufflage 7, par exemple à l'aide du dispositif de régulation de l'instant de commande d'ouverture TRo de l'électrovanne 17 de présoufflage.

Cela permet d'augmenter la fiabilité de la production et de limiter les défauts de fabrication sur les autres stations 7.

Dans l'exemple illustré en figure 4, les paramètres de régulation mémorisés lors de la phase d'initialisation comprennent l'instant Ac de début de présoufflage et, avantageusement, une tolérance d'acceptation pour cet instant. Lors de l'étape « b1 » de la phase de régulation, le point caractéristique sur la courbe de pression mesurée est l'instant Ar de début de présoufflage. Le paramètre de fonctionnement de la machine 1 susceptible d'avoir une influence sur le début de présoufflage est l'instant TRo de commande d'ouverture de l'électrovanne. L'étape « b2 » de la phase de régulation inclue de calculer à partir de la courbe mesurée, l'instant Ar de début de présoufflage et de calculer un écart avec l'instant consigne Ac de début de présoufflage. Elle peut avantageusement comprendre de comparer l'écart calculé avec la limite de régulation. En cas de dépassement de l'éventuelle limite, elle comprend de calculer un nouvel instant TRo de commande de l'électrovanne 17 de présoufflage en fonction de l'écart calculé et éventuellement d'une partie ou de la totalité de la tolérance d'acceptation concernant l'instant de début de présoufflage. Cette nouvelle valeur de paramètre de la machine 1 sera prise en compte lors du ou de l'un des cycles suivant de production de récipients.

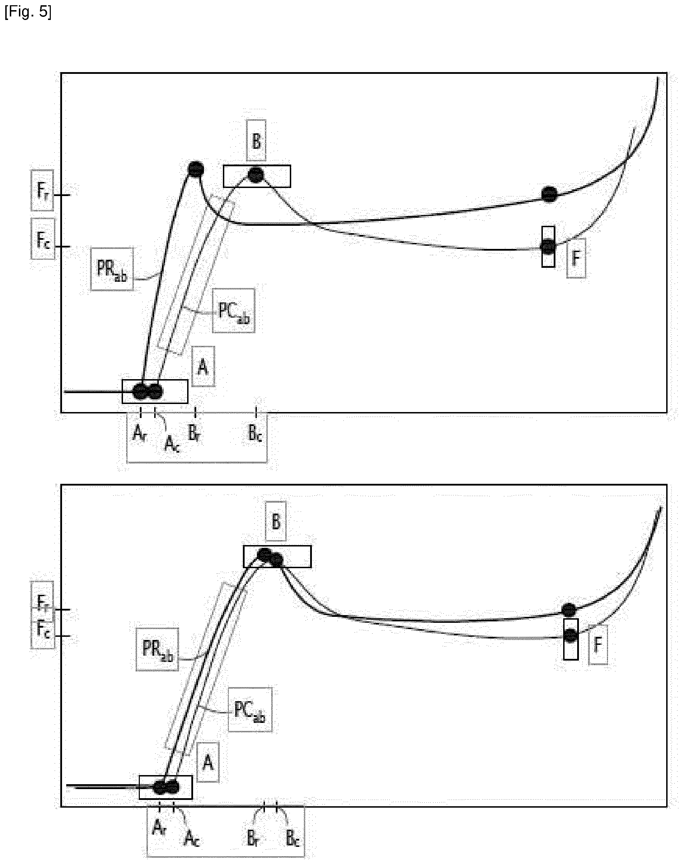

Dans l'exemple illustré en figure 5, les paramètres de régulation mémorisés lors de la phase d'initialisation comprennent la pente PCab moyenne entre l'instant Ac de début de présoufflage et le pic B de pression de présoufflage, ainsi qu'une éventuelle tolérance d'acceptation pour cette pente. Ils peuvent avantageusement comprendre, mais de manière non obligatoire les paramètres de régulation du mode de réalisation illustré en figure 4.

L'étape « b1 » de la phase de régulation pour le mode de réalisation figure 5 comprend le calcul de la pente moyenne PRab entre le début de présoufflage et le pic de pression de présoufflage à partir de la courbe de pression mesurée, ainsi qu'un écart entre cette pente réelle PRab et la pente consigne PCab. Elle peut avantageusement comprendre de comparer l'écart calculé avec l'éventuelle limite de régulation de la pente PCab. Cette étape « b1 » de la phase de régulation peut en outre comprendre avantageusement, mais de manière non obligatoire, les calculs effectués lors de l'étape « b1 » du mode de réalisation de la figure 4.

Les paramètres machine susceptibles d'avoir une influence sur la pente moyenne sont pris parmi : le débit nominal ou le profil temporel du débit du fluide de présoufflage, la vitesse nominale ou le profil temporel de la vitesse d'étirage par la tige 10, la pression nominale ou le profil temporel de la pression de présoufflage, ou une combinaison d'un ou de plusieurs des paramètres précités.

L'étape « b2 » du mode de réalisation illustré figure 5 comprend le calcul d'une nouvelle valeur d'un ou de plusieurs des paramètres de la machine 1 susceptibles d'avoir un influence sur la pente PRab, en fonction de écart calculé et éventuellement d'une partie ou de la totalité de la tolérance d'acceptation concernant la pente PRab. Cette étape « b2 » de la phase de régulation peut en outre comprendre avantageusement, mais de manière non obligatoire, le calcul du paramètre de la machine 1 effectué pour le mode de réalisation de la figure 4.

La nouvelle valeur d'un ou de plusieurs desdits paramètres machine sont appliqué comme consigne lors du ou de l'un des cycles suivant de production de récipients. Dans le cas où la phase de régulation comprend aussi les actions de la phase de régulation du mode de réalisation illustré figure 4, l'application des nouvelles consignes de paramètres machines peuvent se faire au cours du même cycle ultérieur de production ou au cours de cycles de production ultérieurs différents.

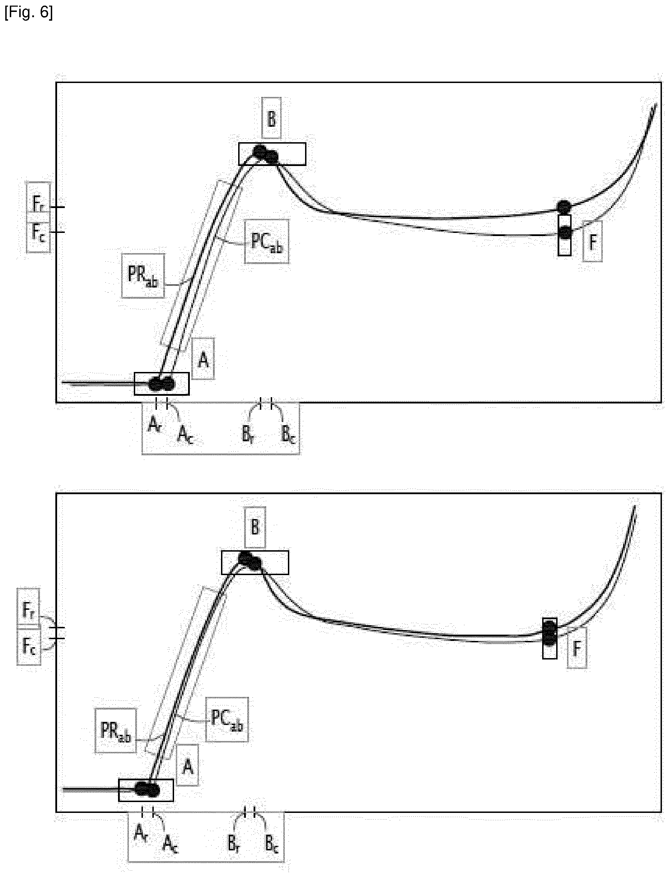

Dans l'exemple illustré en figure 6, les paramètres de régulation mémorisés lors de la phase d'initialisation comprennent la pression en fin de présoufflage, ainsi qu'une éventuelle tolérance d'acceptation pour cette pression. Ils peuvent avantageusement comprendre, mais de manière non obligatoire les paramètres de régulation du mode de réalisation illustré en figure 4 et/ou en figure 5.

L'étape « b1 » de la phase de régulation pour le mode de réalisation figure 6 comprend le calcul à partir de la courbe de pression mesurée de la pression en fin de présoufflage, ainsi qu'un écart entre cette pression Fr et la pression consigne Fc. Elle peut avantageusement comprendre de comparer l'écart calculé avec l'éventuelle limite de régulation de la pression Fc. Cette étape « b1 » de la phase de régulation peut en outre comprendre avantageusement, mais de manière non obligatoire, les calculs effectués lors de l'étape « b1 » du mode de réalisation de la figure 4 et/ou figure 5.

Les paramètres machine susceptibles d'avoir une influence sur la pression de fin de présoufflage sont pris parmi : le profil temporel du débit du fluide de présoufflage, la pression nominale ou le profil temporel de la pression de présoufflage, ou une combinaison d'un ou de plusieurs des paramètres précités.

L'étape « b2 » du mode de réalisation illustré figure 6 comprend le calcul d'une nouvelle valeur d'un ou de plusieurs des paramètres de la machine 1 susceptibles d'avoir un influence sur la pression Fr de fin de présoufflage, en fonction de écart calculé et éventuellement d'une partie ou de la totalité de la tolérance d'acceptation concernant la pression Fr. Cette étape « b2 » de la phase de régulation peut en outre comprendre avantageusement, mais de manière non obligatoire, le calcul du paramètre de la machine 1 effectué pour le mode de réalisation de la figure 4 et/ou figure 5.

La nouvelle valeur d'un ou de plusieurs desdits paramètres machine sont appliqué comme consigne lors du ou de l'un des cycles suivant de production de récipients. Dans le cas où la phase de régulation comprend aussi les actions de la phase de régulation du mode de réalisation illustré figure 4, l'application des nouvelles consignes de paramètres machines peuvent se faire au cours du même cycle ultérieur de production ou au cours de cycles de production ultérieurs différents.

La phase de production régulée b) du procédé selon l'invention inclut en outre une étape de surveillance b3) d'un éventuel changement imposé par l'opérateur d'une valeur d'un paramètre de fonctionnement de la machine 1.

L'étape de surveillance b3) est mise en oeuvre par le dispositif de surveillance d'un éventuel changement imposé par l'opérateur d'un paramètre de fonctionnement de la machine 1. Un opérateur peut imposer le changement d'un ou de plusieurs paramètres de fonctionnement de la machine 1, par exemple lorsque des préformes 3 présentant des caractéristiques différentes en termes de composition, ou de température de chauffe avant présoufflage sont utilisées, ou pour modifier le procédé de production en fonction des caractéristiques du récipient final souhaité.

Le procédé de régulation comprend en outre une phase de mise à jour automatique du ou des paramètres de régulation qui est mise en oeuvre en cas de changement imposé d'un paramètre de fonctionnement de la machine 1.

La phase de mise à jour inclut
c1) une étape de stabilisation au cours de laquelle la production est poursuivie à partir du paramètre de fonctionnement de la machine 1 imposé pendant une durée de stabilisation prédéterminée, et pour chaque cycle de production les actions b1) sont exécutées, et les actions b2) sont suspendues.

Pendant l'étape c1), les courbes temporelles de pression sont par exemple mémorisées, et analysées par le dispositif d'analyse d'une succession de courbes temporelles de pression régnant à l'intérieur de la préforme 3 au cours de la phase de stabilisation sans régulation.

La durée de l'étape de stabilisation est déterminée par l'atteinte d'un cycle de production au cours duquel un instant réel ou une pression réelle mesuré(e) à un point caractéristique A, B, Pab, F est inférieur(e) à la tolérance d'acceptation pour cet instant réel ou cette pression réelle.

L'étape de stabilisation a par exemple une durée comprise entre 1 et 3 minutes. On note que pendant ce temps, la production continue, c'est uniquement le système de régulation qui est en phase de mise à jour automatique, mais les critères de qualité et d'acceptation de récipient produits continuent d'être actifs.

c2) une étape de correction de l'instant de référence et/ou de la pression de référence en fonction des valeurs d'instant réel et/ou de pression réelle mémorisées au cours de l'étape de stabilisation c1), afin de poursuivre la phase b) de production régulée.

L'étape c2) est par exemple mise en oeuvre par le dispositif de mise à jour d'au moins une référence de régulation, raccordés au dispositif d'analyse.

Par exemple, la phase b) de production régulée comprend d'abord un éventuel changement imposé de l'instant de commande d'ouverture TRo de l'électrovanne de présoufflage 17, puis après l'étape de surveillance b3), l'étape de stabilisation c1) est déclenchée jusqu'à un cycle de production au cours duquel l'instant réel Ar de début de présoufflage dans la préforme 3 est stabilisé en présentant une variation moindre que la tolérance d'acceptation de début de présoufflage. A l'étape de correction c2), l'instant réel Ar de début de présoufflage est pris comme nouvel instant de référence Ac de début de présoufflage. Puis l'instant réel Br de pic de pression est calculé pour les cycles de production suivants, et comparé l'instant de référence Bc de pic de pression, par exemple à l'aide du dispositif de comparaison de l'instant réel Br de pic de pression avec l'instant de référence Bc de pic de pression.

Si l'instant réel Br de pic de pression est antérieur, respectivement postérieur, à l'instant de référence Bc de pic de pression, d'un écart temporel supérieur à la tolérance d'acceptation, est calculée une nouvelle valeur de débit de présoufflage Dp réduite, respectivement augmentée par rapport à la valeur du débit de présoufflage Dp au cours du cycle de production pendant lequel l'instant réel Br de pic de pression a été calculé, par exemple à l'aide du dispositif de régulation du débit de présoufflage Dp injecté dans la préforme 3, comme cela est représenté sur la figure 5.

La nouvelle valeur de débit de présoufflage Dp est par exemple appliquée à l'aide du dispositif 18 commandable apte à faire varier le débit de fluide sous pression, ou de l'électrovanne à débit variable commandable.

De préférence, la phase de production régulée b) comprend d'abord le changement imposé éventuel de l'instant de commande d'ouverture TRo de l'électrovanne de présoufflage 17, puis après l'étape de surveillance b3), l'étape de stabilisation c1) est déclenchée jusqu'à un cycle de production au cours duquel l'instant réel Ar de début de présoufflage dans la préforme 3 est inférieur à la tolérance d'acceptation de début de présoufflage, puis la phase b) comprend l'éventuel changement imposé du débit de présoufflage Dp, puis, après l'étape de surveillance b3), l'étape de stabilisation c1) est déclenchée jusqu'à un cycle de production au cours duquel l'instant réel Ar de début de présoufflage et l'instant réel Br de pic de pression sont inférieur à leur tolérance d'acceptation respective. Puis, la pente réelle PRab entre l'instant réel Ar de début de présoufflage et l'instant réel Br de pic de pression est calculée pour les cycles de production suivants. La pente réelle PRab est par exemple comparée à la pression de référence PCab à l'aide du dispositif de comparaison de pente réelle PRab avec la pression de référence PCab.

Si la pente réelle PRab s'écarte de la pente de référence PCab, d'un écart supérieur à la tolérance d'acceptation de pente, sont calculées :

- une nouvelle valeur de débit nominal de présoufflage ou un nouveau profil temporel de débit de présoufflage Dp, et/ou
- une nouvelle valeur de pression de la source de fluide sous pression, ici la source de fluide de présoufflage 15, et/ou
- une nouvelle valeur de vitesse nominale ou de profil temporel d'étirage de la tige 10 d'étirage.

La nouvelle valeur de débit nominal de présoufflage ou le nouveau profil temporel de débit de présoufflage Dp sont par exemple calculés par le dispositif de régulation du débit injecté dans la préforme en fonction du résultat de cette comparaison.

La nouvelle valeur de pression de la source de fluide sous pression 15 est par exemple calculée par le dispositif de régulation de la pression de la source de fluide sous pression 15 en fonction du résultat de cette comparaison.

La nouvelle valeur de vitesse nominale ou de profil temporel d'étirage de la tige d'étirage 10 est par exemple calculée par le dispositif de régulation de vitesse nominale ou de profil temporel d'étirage de la tige 10 d'étirage en fonction du résultat de cette comparaison.

Par exemple, l'étape b1) comprend uniquement ou en outre les opérations suivantes :

- l'instant réel Ar de début de présoufflage dans la station de référence ou dans une autre station 7, où la pression dans la préforme 3 commence à croître est détecté par le capteur de pression 13 et le processeur 25;
- cet instant Ar est mémorisé par la mémoire 27;
- l'instant réel de fin de présoufflage est calculé par le processeur 25 selon le calcul défini précédemment ;
- une pression réelle Fr de fin de présoufflage est déduite à partir des mesures de pression effectuées par le capteur 13 de pression, la pression réelle Fr de fin de présoufflage ainsi déterminée est comparée avec la pression de référence Fc de fin de présoufflage pour la station de référence, par exemple à l'aide du dispositif de comparaison de la pression réelle Fr de fin de présoufflage avec la pression de référence Fc de fin de présoufflage.

Si la pression réelle Fr de fin de présoufflage s'écarte de la pression de référence Fc de fin de présoufflage d'une valeur supérieure à la tolérance d'acceptation, est calculée une nouvelle valeur de débit de présoufflage Dp réduite, respectivement augmentée par rapport à la valeur du débit de présoufflage Dp au cours du cycle de production pendant lequel l'instant réel de fin de présoufflage a été calculé, par exemple par le dispositif de régulation du débit de présoufflage Dp injecté dans la préforme 3 en fonction du résultat de cette comparaison, comme cela est représenté sur la figure 6.

En fonction du résultat de cette comparaison, le dispositif de régulation du débit de présoufflage Dp injecté dans la préforme 3 va commander une modification du débit de présoufflage Dp.

Selon un exemple particulier, la machine 1 est équipée d'au moins une première station 7 et d'une deuxième station, l'une des stations est une station de référence. Chaque station 7 est pourvue d'un capteur 13 de pression régnant à l'intérieur de la préforme 3 de ladite station 7 et d'une électrovanne de présoufflage 17 présentant un temps de réponse réel entre l'instant de commande de l'ouverture TRo de l'électrovanne 17 de présoufflage et le début effectif de l'augmentation de pression dans la préforme 3.

Selon cet exemple, les paramètres de régulation comprennent le début du présoufflage, un temps de réponse prédéterminé, et à l'étape b2), en plus du calcul d'une nouvelle valeur d'instant de commande de l'ouverture TRo de l'électrovanne 17 de présoufflage, le temps de réponse réel est calculé. Si le temps de réponse réel est supérieur au temps de réponse prédéterminé :

- une alerte de dérive de la station de référence est émise, et/ou
- pour un cycle de production ultérieur, l'instant de référence de commande d'ouverture TRo de l'électrovanne 17 de présoufflage de la deuxième station est calculé, et la deuxième station est alors considérée comme une nouvelle station de référence.

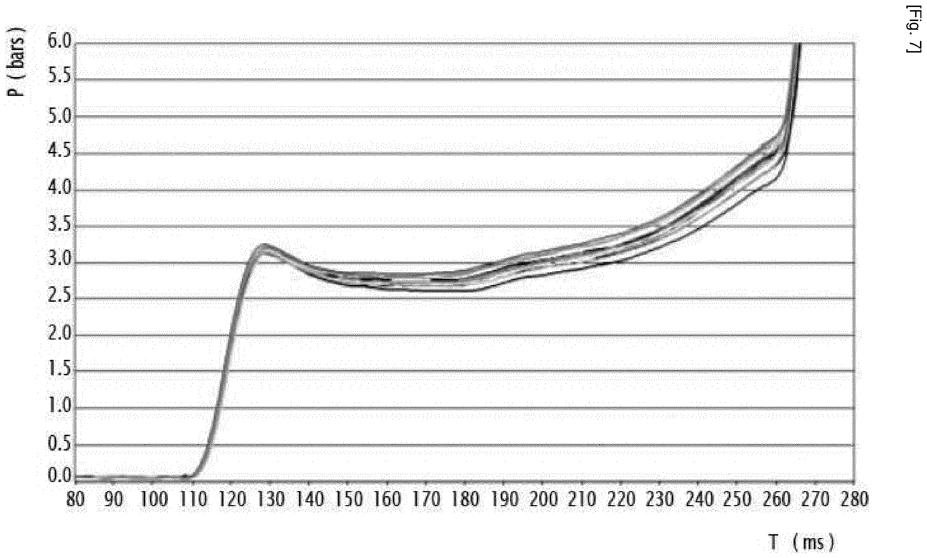

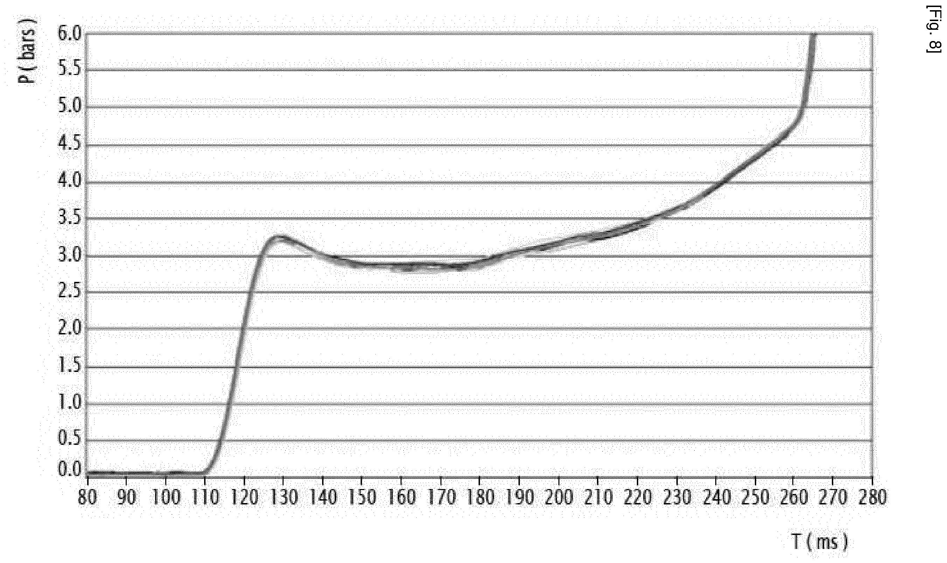

La figure 7 représente une pluralité de courbes de présoufflage obtenues au cours de cycles de présoufflage sans régulation, et la figure 8 représente une pluralité de courbes de présoufflage obtenues au cours de cycles de présoufflage avec régulation selon le procédé de l'invention. Il apparaît clairement que les courbes de présoufflage sont bien plus proches les unes des autres avec régulation, démontrant ainsi l'obtention de courbes de présoufflage plus régulières, et par conséquent une moindre variabilité des récipients finaux.

Le procédé de régulation selon l'invention permet de poursuivre la production régulée en cas de changement imposé d'un paramètre de fonctionnement de la machine 1 en introduisant de nouvelles références de régulation, sans que la régulation ne soit arrêtée et qu'il soit nécessaire de mettre en place manuellement de nouvelles références.

Il en résulte des gains de productivité et une meilleure fiabilité du procédé et des produits obtenus.

La présente invention a également pour objet un produit programme d'ordinateur destiné à être implémenté sur la machine 1.

Le produit programme d'ordinateur comprend des instructions pour :

    commander l'ouverture et la fermeture de l'électrovanne de présoufflage 17;
    commander le débit de présoufflage Dp ;
    prendre en compte l'instant réel Ar de début de présoufflage ;
    prendre en compte l'instant de référence Ac de début de présoufflage ;
    comparer l'instant réel Ar de début de présoufflage avec l'instant de référence Ac de début de présoufflage ;
    réguler l'instant de commande d'ouverture TRo de l'électrovanne 17 de présoufflage en fonction du résultat de cette comparaison ;
    des instructions pour la détection d'un changement imposé par l'opérateur d'au moins un paramètre de fonctionnement de la machine 1 ;
    des instructions pour mesurer une série de courbes de présoufflage et mémoriser au moins les positions réelles Ar, Br, PRab, Fr des points caractéristiques A, B, Pab, F d'une série de courbes de présoufflage, et suspendre la modification des paramètres de fonctionnement de la machine 1 pendant une durée de stabilisation prédéterminée ; et
    des instructions pour mettre à jour au moins un paramètre de régulation et autoriser de nouveau une production régulée.

De préférence, le produit programme d'ordinateur comprend en outre des instructions pour :

    prendre en compte l'instant réel Br de pic de pression de présoufflage dans la préforme 3;
    prendre en compte l'instant de référence Bc de pic de pression de présoufflage dans la préforme 3;
    comparer l'instant réel Br de pic de pression de présoufflage dans la préforme 3 avec l'instant de référence Bc de pic de pression de présoufflage dans la préforme 3; réguler le débit de présoufflage Dp en fonction du résultat de cette comparaison ;
    et/ou calculer une pente réelle PRab entre la pression mesurée à l'instant réel Br de pic de pression de présoufflage dans la préforme 3 et la pression mesurée à l'instant réel Ar de début de présoufflage;

calculer une pente de référence PCab entre la pression mesurée à l'instant de référence Bc de pic de pression de présoufflage dans la préforme 3 et la pression mesurée à l'instant de référence Ac de début de présoufflage ;
comparer la pente réelle PRab avec la pente de référence PCab;
réguler le débit de présoufflage Dp en fonction du résultat de cette comparaison, et/ou la pression de la source de fluide sous pression 15, et/ou la vitesse nominale ou le profil temporel d'étirage de la tige d'étirage 10;
et/ou prendre en compte la pression réelle Fr de fin de présoufflage ;
prendre en compte la pression de référence Fc de fin de présoufflage ;
comparer la pression réelle Fr de fin de présoufflage avec la pression de référence Fc de fin de présoufflage ;
réguler le débit de présoufflage Dp en fonction du résultat de cette comparaison.

## Revendications

1. Procédé de régulation d'une production cyclique de récipients (**2**) par étirage-soufflage à partir de préformes (**3**) en matière plastique dans une machine (**1**) comprenant une ou plusieurs stations (**7**) d'étirage-soufflage conçues chacune pour produire un récipient (**2**) au cours d'un cycle de production, et pourvues chacune d'une électrovanne (**17**) de présoufflage raccordant fluidiquement la préforme (**3**) à une source de fluide (**15**) sous pression fournissant un débit de présoufflage (**Dp**) pendant une phase de présoufflage, le procédé de régulation comprenant :

   a) une phase d'initialisation incluant une étape de mise en place par un opérateur et de mémorisation d'une pluralité de paramètres de fonctionnement de la machine (**1**) pendant le cycle de production, et de paramètres de régulation incluant au moins une position de référence (**Ac, Bc, PCab, Fc**) d'au moins un point caractéristique (**A**, **B, Pab, F**) d'une courbe de présoufflage correspondant à la pression régnant à l'intérieur de la préforme (**3**) durant au moins une partie du présoufflage, ladite position de référence (**Ac, Bc, PCab, Fc**) étant déterminée par un instant de référence et/ou une pression de référence,
   b) une phase de production régulée au cours de laquelle, pour chaque cycle de production, au moins une préforme (**3**) est étirée et soufflée par injection d'un fluide sous pression dans chaque station (**7**) et au cours de laquelle :

      - b1) pour au moins une station de référence de la machine (**1**), la courbe de présoufflage incluant le point caractéristique est mesurée et mémorisée, et un instant réel et/ou une pression réelle est calculé(e) ou déterminé(e), correspondant audit point caractéristique (**A, B, Pab, F**) pour la courbe de présoufflage mesurée, et
      - b2) une nouvelle valeur d'au moins un paramètre de fonctionnement de la machine (**1**) est calculée et mémorisée en fonction d'un écart entre l'instant réel et l'instant de référence et/ou entre la pression réelle et la pression de référence,

         le procédé de régulation étant **caractérisé en ce que** la phase de production régulée inclut une étape de surveillance b3) d'un éventuel changement imposé par l'opérateur d'une valeur d'un paramètre de fonctionnement de la machine (**1**),
         le procédé de régulation comprenant en outre une phase de mise à jour automatique du ou des paramètres de régulation qui est mise en oeuvre en cas de changement imposé d'un paramètre de fonctionnement de la machine (**1**), incluant :

            c1) une étape de stabilisation au cours de laquelle la production est poursuivie à partir du paramètre imposé pendant une durée de stabilisation prédéterminée, et pour chaque cycle de production les actions b1) sont exécutées, et les actions b2) sont suspendues, et
            c2) une étape de correction de l'instant de référence et/ou de la pression de référence en fonction des valeurs d'instant réel et/ou de pression réelle mémorisées au cours de l'étape de stabilisation, afin de poursuivre la phase de production régulée.

2. Procédé selon la revendication précédente, dans lequel les paramètres de fonctionnement de la machine (**1**) susceptibles d'être recalculés pendant l'étape b2) sont pris parmi : un instant de commande d'ouverture (**TRo**) de l'électrovanne (**17**) de présoufflage, une valeur ou un profil temporel de débit de présoufflage (**Dp**), une pression de présoufflage ou un profil temporel d'une course d'une tige (10) d'étirage.

3. Procédé selon l'une des revendications précédentes, dans lequel les paramètres de régulation incluent la mémorisation d'au moins une tolérance d'acceptation d'une position réelle (**Ar, Br, PRab, Fr**) de l'au moins un point caractéristique (**A**, **B, Pab, F**) de la courbe de présoufflage choisi par rapport à la position de référence dudit point caractéristique (**A**, **B, Pab, F**), et dans lequel il n'y a pas de calcul d'une nouvelle valeur dudit paramètre de fonctionnement de la machine (**1**) si ledit écart est inférieur à la tolérance d'acceptation.

4. Procédé selon l'une des revendications précédentes, dans lequel les paramètres de régulation comprennent un instant de référence (**Ac**) du début d'augmentation de pression dans la préforme (**3**), appelé instant de référence (**Ac**) de début de présoufflage, et une tolérance pour l'instant de référence (**Ac**) de début de présoufflage, et dans lequel, si l'instant réel (**Ar**) de début de présoufflage dans la préforme (**3**) de la station (**7**) de référence est postérieur, respectivement antérieur, d'un écart temporel à l'instant de référence (**Ac**) de début de présoufflage pour ladite station de référence supérieur à la tolérance d'acceptation, la nouvelle valeur calculée comme instant de commande d'ouverture (**TRo**) de l'électrovanne (**17**) de présoufflage de chacune des stations (**7**) d'étirage-soufflage est alors anticipée, respectivement retardée, dudit écart temporel dans toutes les stations (**7**) d'étirage-soufflage.

5. Procédé selon les revendications 3 et 4 prises dans leur ensemble, dans lequel les paramètres de régulation incluent en outre :

un instant de référence (**Bc**) d'un pic de pression de présoufflage dans la préforme (**3**), et une tolérance d'acceptation pour l'instant de référence (**Bc**) du pic de pression, dans lequel la phase de production régulée b) comprend d'abord un éventuel changement imposé de l'instant de commande d'ouverture (**TRo**) de l'électrovanne (**17**) de présoufflage jusqu'à un cycle de production au cours duquel l'instant réel (**Ar**) de début de présoufflage dans la préforme (**3**) est inférieur à la tolérance d'acceptation de début de présoufflage, un instant réel (**Br**) de pic de pression est calculé pour les cycles de production suivants, et si ce dernier est antérieur, respectivement postérieur, à l'instant de référence (**Bc**) de pic de pression, d'un écart temporel supérieur à la tolérance d'acceptation, est calculée une nouvelle valeur de débit de présoufflage (**Dp**) réduite, respectivement augmentée par rapport à la valeur du débit de présoufflage (**Dp**) au cours du cycle de production pendant lequel l'instant réel (**Br**) de pic de pression a été calculé.

6. Procédé selon la revendication précédente, dans lequel les paramètres de régulation incluent en outre une pente de référence (**PCab**) d'augmentation de la pression entre le point caractéristique (**A**) de début de présoufflage et le point caractéristique (**B**) de pic de pression, et une tolérance d'acceptation pour ladite pente de référence (**PCab**) d'augmentation de la pression, dans lequel la phase de production régulée comprend d'abord l'éventuel changement imposé de l'instant de commande d'ouverture (**TRo**) de l'électrovanne (**17**) de présoufflage jusqu'à un cycle de production au cours duquel l'instant réel (**Ar**) de début de présoufflage dans la préforme (**3**) est inférieur à la tolérance d'acceptation de début de présoufflage, puis l'éventuel changement imposé du débit de présoufflage (**Dp**) jusqu'à un cycle de production au cours duquel l'instant réel (**Ar**) de début de présoufflage et l'instant réel (**Br**) de pic de pression sont inférieurs à leur tolérance d'acceptation respective, puis une pente réelle (**PRab**) d'augmentation de la pression entre l'instant réel (**Ar**) de début de présoufflage et l'instant réel (**Br**) de pic de pression est calculée pour les cycles de production suivants, et si la pente réelle (**PRab**) s'écarte de la pente de référence (**PCab**), d'un écart supérieur à la tolérance d'acceptation de pente, sont calculées :

- une nouvelle valeur de débit nominal de présoufflage ou un nouveau profil temporel de débit de présoufflage, et/ou
- une nouvelle valeur de pression de la source de fluide (**15**) sous pression, et/ou
- une nouvelle valeur de vitesse nominale ou de profil temporel d'étirage d'une tige d'étirage (**10**).

7. Procédé selon l'une quelconque des revendications précédentes, dans lequel l'étape b1) comprend uniquement ou en outre les opérations consistant à : détecter un instant (**Ar**), dit instant réel (**Ar**) de début de présoufflage dans la station de référence ou dans une autre station (**7**), où la pression dans la préforme (**3**) commence à croître ; mémoriser cet instant ; calculer un instant réel de fin de présoufflage tel que :

instant réel de fin de présoufflage = instant réel de début de présoufflage $+\Delta t - \delta$,

où $\Delta t$ est une durée prédéfinie d'ouverture de l'électrovanne (**17**) de présoufflage, $\delta$ est une constante prédéterminée ; en déduire une pression réelle (**Fr**) de fin de présoufflage à partir des mesures de pression effectuées dans l'étape b1);

comparer la pression réelle (**Fr**) de fin de présoufflage ainsi déterminée avec une pression de référence (**Fc**) de fin de présoufflage pour la station de référence ;

si la pression réelle (**Fr**) de fin de présoufflage s'écarte de la pression de référence (**Fc**) de fin de présoufflage d'une valeur supérieure à une tolérance d'acceptation, est calculée une nouvelle valeur de débit de présoufflage (**Dp**) réduite, respectivement augmentée par rapport à la valeur du débit de présoufflage (**Dp**) au cours du cycle de production pendant lequel la pression réelle (**Fr**) de fin de présoufflage a été calculée.

8. Procédé selon l'une des revendications précédentes, dans lequel les paramètres de régulation incluent la mémorisation d'au moins une limite de régulation pour au moins un des paramètres de fonctionnement machine (**1**), dit paramètre surveillé, les actions b2) de l'étape de production régulée incluent en outre de comparer la nouvelle valeur calculée pour un paramètre surveillé avec la limite de régulation, et en cas de dépassement de ladite limite, une alerte de dégradation de la régulation est émise et la production régulée se poursuit à partir d'une nouvelle valeur du paramètre surveillé prise parmi : la valeur au cours du cycle de production précédent, la valeur entrée dans la phase d'initialisation, ou une combinaison desdites valeurs.

9. Procédé selon l'une des revendications précédentes, utilisant une machine (**1**) équipée d'une première station (**7**) et d'une deuxième station, l'une des stations étant une station de référence, chaque station (**7**) étant pourvue d'un capteur (**13**) de pression régnant à l'intérieur de la préforme (**3**) de ladite station (**7**) et d'une électrovanne (**17**) de présoufflage présentant un temps de réponse entre un instant de commande de l'ouverture (**TRo**) de l'électrovanne (**17**) et le début effectif de l'augmentation de pression dans la préforme (**3**), procédé dans lequel les paramètres de régulation comprennent le début du présoufflage, et un temps de réponse prédéterminé, et dans lequel en plus d'une nouvelle valeur d'instant de commande (**TRo**) de l'ouverture de l'électrovanne (**17**) de présoufflage, un temps de réponse réel est calculé,

si le temps de réponse réel est supérieur au temps de réponse prédéterminé :

une alerte de dérive de la station de référence est émise, et/ou

pour un cycle de production ultérieur, l'instant de référence d'ouverture de l'électrovanne (**17**) de la deuxième station est calculé, la deuxième station étant alors considérée comme une nouvelle station de référence.

10. Machine (**1**) de production cyclique par étirage-soufflage à partir de préforme (**3**)s en matière plastique, qui comprend : une source de fluide (**15**) à une pression de présoufflage, une ou plusieurs stations (**7**) d'étirage-soufflage, chaque station (**7**) comprenant un moule (**8**) présentant une cavité (**9**) destinée à recevoir une préforme (**3**) ; une électrovanne (**17**) propre à mettre en communication l'intérieur de la préforme (**3**), reçue dans la cavité (**9**), avec ladite source de fluide (**15**) selon un débit de présoufflage (**Dp**) prédéterminé ; un dispositif de commande de l'ouverture et de la fermeture de l'électrovanne (**17**) ; un capteur (**13**) propre à mesurer la pression régnant à l'intérieur de la préforme (**3**) ; un dispositif de détection d'un instant, dit instant réel (**Ar**) de début de présoufflage, où la pression dans la préforme (**3**) commence à croître ; un dispositif de comparaison de cet instant réel (**Ar**) avec un instant de référence (**Ac**) de début de présoufflage ; un dispositif de régulation d'un instant de commande d'ouverture (**TRo**) de l'électrovanne (**17**) en fonction du résultat de cette comparaison,

**caractérisée en ce qu'**elle comprend un dispositif de surveillance d'un éventuel changement imposé par l'opérateur d'un paramètre de fonctionnement de la machine (**1**), un dispositif d'analyse d'une succession de courbes temporelles de pression régnant à l'intérieur de la préforme (**3**) au cours d'une phase de stabilisation sans régulation, et un dispositif de mise à jour d'au moins une référence de régulation, raccordés au dispositif d'analyse.

11. Machine (**1**) selon la revendication précédente, comprenant en outre un dispositif commandable apte à faire varier le débit de fluide sous pression, ou une électrovanne (**17**) à débit variable commandable; un dispositif de détection d'un instant où la pression dans la préforme (**3**) atteint un pic, dit instant réel (**Br**) de pic de pression de présoufflage ; un dispositif de comparaison de cet instant réel (**Br**) de pic de pression avec un instant de référence (**Bc**) de pic de pression; un dispositif de régulation du débit injecté dans la préforme (**3**) en fonction du résultat de cette comparaison.

12. Machine (**1**) selon la revendication précédente, comprenant en outre un dispositif de calcul d'une pente réelle (**PRab**) d'augmentation de la pression entre la pression mesurée à l'instant réel (**Ar**) début de présoufflage et la pression mesurée à l'instant réel de (**Br**) de pic de pression; un dispositif de comparaison de cette pente réelle (**PRab**) avec une pente de référence (**PCab**) ; un dispositif de régulation du débit (**Dp**) de présoufflage injecté dans la préforme (**3**) en fonction du résultat de cette comparaison et/ou un dispositif de régulation de la pression de la source de fluide sous pression (**15**) en fonction du résultat de cette comparaison, et/ou un dispositif de régulation de vitesse nominale ou de profil temporel d'étirage d'une tige (**10**) d'étirage en fonction du résultat de cette comparaison.

**13.** Machine (**1**) selon la revendication précédente, comprenant en outre un dispositif de détection d'un instant, dit instant réel de fin de présoufflage, où la pression dans la préforme (**3**) recommence à croître ; un dispositif de comparaison de la pression réelle (**Fr**) de fin de présoufflage mesurée à cet instant avec une pression de référence (**Fc**) de fin de présoufflage ; un dispositif de régulation du débit de présoufflage (**Dp**) injecté dans la préforme (**3**) en fonction du résultat de cette comparaison.

**14.** Produit programme d'ordinateur destiné à être implémenté sur une machine (**1**) de fabrication de récipients (2) selon l'une des revendications 10 à 13 pour mettre en oeuvre le procédé selon l'une quelconque des revendications 1 à 9.

**Patentansprüche**

**1.** Verfahren zur Regelung einer zyklischen Herstellung von Behältern (2) durch Streckblasen aus Vorformlingen (3) aus Kunststoff in einer Maschine (1), die eine oder mehrere Streckblasstationen (7) umfasst, die jeweils dafür ausgelegt sind, einen Behälter (2) im Verlauf eines Herstellungszyklus herzustellen, und jeweils mit einem Vorblasmagnetventil (17) versehen sind, das den Vorformling (3) fluidisch an eine Druckfluidquelle (15) anschließt, die einen Vorblasdurchsatz (Dp) während einer Vorblasphase bereitstellt, das Regelungsverfahren umfassend:

a) eine Initialisierungsphase, die einen Schritt des Festlegens, durch einen Bediener, und des Speicherns einer Mehrzahl von Betriebsparametern der Maschine (1) während des Herstellungszyklus und von Regelungsparametern enthält, die wenigstens eine Referenzposition (Ac, Bc, PCab, Fc) wenigstens eines charakteristischen Punkts (A, B, Pab, F) einer Vorblaskurve enthalten, der dem Druck entspricht, der im Inneren des Vorformlings (3) während wenigstens eines Abschnitts des Vorblasens vorherrscht, wobei die Referenzposition (Ac, Bc, PCab, Fc) durch einen Referenzzeitpunkt und/oder einen Referenzdruck bestimmt wird,
b) eine Phase geregelter Herstellung, in deren Verlauf für jeden Herstellungszyklus wenigstens ein Vorformling (3) durch Einspritzung eines Druckfluids in jeder Station (7) gestreckt und geblasen wird, und in deren Verlauf:

- b1) für wenigstens eine Referenzstation der Maschine (1) die Vorblaskurve, die den charakteristischen Punkt enthält, gemessen und gespeichert wird, und ein Istzeitpunkt und/oder ein Istdruck berechnet oder bestimmt wird, der dem charakteristischen Punkt (A, B, Pab, F) für die gemessene Vorblaskurve entspricht, und
- b2) ein neuer Wert wenigstens eines Betriebsparameters der Maschine (1) je nach einer Abweichung zwischen dem Istzeitpunkt und dem Referenzzeitpunkt und/oder zwischen dem Istdruck und dem Referenzdruck berechnet und gespeichert wird,

wobei das Regelungsverfahren **dadurch gekennzeichnet ist, dass** die Phase geregelter Herstellung einen Schritt des Überwachens b3) einer eventuellen vom Bediener vorgegebenen Änderung eines Werts eines Betriebsparameters der Maschine (1) enthält,
wobei das Regelungsverfahren ferner eine Phase des automatischen Aktualisierens des oder der Regelungsparameter umfasst, die im Falle einer vorgegebenen Änderung eines Betriebsparameters der Maschine (1) durchgeführt wird, enthaltend:

c1) einen Schritt des Stabilisierens, in dessen Verlauf die Herstellung anhand des vorgegebenen Parameters während einer vorgegebenen Stabilisierungsdauer fortgesetzt wird, und für jeden Herstellungszyklus die Aktionen b1) ausgeführt und die Aktionen b2) ausgesetzt werden, und
c2) einen Schritt des Korrigierens des Referenzzeitpunkts und/oder des Referenzdrucks je nach den Istzeitpunktund/oder Istdruck-Werten, die im Verlauf des Schritts des Stabilisierens gespeichert werden, um die Phase geregelter Herstellung fortzusetzen.

**2.** Verfahren nach dem vorhergehenden Anspruch, wobei die Betriebsparameter der Maschine (1), die während des Schritts b2) möglicherweise neu berechnet werden, aus Folgendem ausgewählt werden: einem Zeitpunkt des Steuerns des Öffnens (TRo) des Vorblasmagnetventils (17), einem Wert oder einem Zeitprofil eines Vorblasdurchsatzes (Dp), einem Vorblasdruck oder einem Zeitprofil eines Wegs einer Reckstange (10).

**3.** Verfahren nach einem der vorhergehenden Ansprüche, wobei die Regelungsparameter die Speicherung wenigstens einer Akzeptanztoleranz einer Istposition (Ar, Br, PRab, Fr) des wenigstens einen charakteristischen Punkts (A, B, Pab, F) der Vorblaskurve enthalten, der im Verhältnis zur Referenzposition des charakteristischen Punkts (A, B, Pab, F) gewählt ist, und wobei kein neuer Wert des Betriebsparameters der Maschine (1) berechnet wird, wenn die Abweichung kleiner als die Akzeptanztoleranz ist.

4. Verfahren nach einem der vorhergehenden Ansprüche, wobei die Regelungsparameter einen Referenzzeitpunkt (Ac) des Beginns des Druckanstiegs im Vorformling (3), Referenzzeitpunkt (Ac) des Vorblasbeginns genannt, und eine Toleranz für den Referenzzeitpunkt (Ac) des Vorblasbeginns umfassen,
und wobei, wenn der Istzeitpunkt (Ar) des Vorblasbeginns im Vorformling (3) der Referenzstation (7) um eine Zeitabweichung hinter bzw. vor dem Referenzzeitpunkt (Ac) des Vorblasbeginns für die Referenzstation liegt, die größer als die Akzeptanztoleranz ist, der neue als Zeitpunkt des Steuerns des Öffnens (TRo) des Vorblasmagnetventils (17) berechnete Wert jeder der Streckblasstationen (7) dann in allen Streckblasstationen (7) um die Zeitabweichung vorgezogen bzw. hinausgezögert wird.

5. Verfahren nach den Ansprüchen 3 und 4 zusammengenommen, wobei die Regelungsparameter ferner Folgendes enthalten:
einen Referenzzeitpunkt (Bc) einer Vorblasdruckspitze im Vorformling (3) und eine Akzeptanztoleranz für den Referenzzeitpunkt (Bc) der Druckspitze, wobei die Phase geregelter Herstellung b) zunächst eine eventuelle vorgegebene Änderung des Zeitpunkts des Steuerns des Öffnens (TRo) des Vorblasmagnetventils (17) bis zu einem Herstellungszyklus umfasst, in dessen Verlauf der Istzeitpunkt (Ar) des Vorblasbeginns im Vorformling (3) kleiner als die Akzeptanztoleranz des Vorblasbeginns ist, ein Druckspitzen-Istzeitpunkt (Br) wird für die folgenden Herstellungszyklen berechnet, und wenn dieser um eine Zeitabweichung vor bzw. hinter dem Druckspitzen-Referenzzeitpunkt (Bc) liegt, die größer als die Akzeptanztoleranz ist, wird ein neuer Vorblasdurchsatzwert (Dp) berechnet, der im Verhältnis zum Vorblasdurchsatzwert (Dp) im Verlauf des Herstellungszyklus, innerhalb dessen der Druckspitzen-Istzeitpunkt (Br) berechnet wurde, verringert bzw. erhöht ist.

6. Verfahren nach dem vorhergehenden Anspruch, wobei die Regelungsparameter ferner eine Referenzsteigung (PCab) der Erhöhung des Drucks zwischen dem charakteristischen Punkt (A) des Vorblasbeginns und dem charakteristischen Druckspitzenpunkt (B) und eine Akzeptanztoleranz für die Referenzsteigung (PCab) der Erhöhung des Drucks enthalten,
wobei die Phase geregelter Herstellung zunächst die eventuelle vorgegebene Änderung des Zeitpunkts des Steuerns des Öffnens (TRo) des Vorblasmagnetventils (17) bis zu einem Herstellungszyklus umfasst, in dessen Verlauf der Istzeitpunkt (Ar) des Vorblasbeginns im Vorformling (3) kleiner als die Akzeptanztoleranz des Vorblasbeginns ist, dann die eventuelle vorgegebene Änderung des Vorblasdurchsatzes (Dp) bis zu einem Herstellungszyklus, in dessen Verlauf der Istzeitpunkt (Ar) des Vorblasbeginns und der Druckspitzen-Istzeitpunkt (Br) kleiner als ihre jeweilige Akzeptanztoleranz sind, dann eine Iststeigung (PRab) der Erhöhung des Drucks zwischen dem Istzeitpunkt (Ar) des Vorblasbeginns und dem Druckspitzen-Istzeitpunkt (Br) für die folgenden Herstellungszyklen berechnet wird, und wenn die Iststeigung (PRab) um eine Abweichung von der Referenzsteigung (PCab) abweicht, die größer als die Steigungsakzeptanztoleranz ist, Folgendes berechnet wird:

- ein neuer Vorblas-Nenndurchsatzwert oder ein neues Vorblasdurchsatz-Zeitprofil, und/oder
- ein neuer Druckwert der Druckfluidquelle (15), und/oder
- ein neuer Wert einer Nenngeschwindigkeit oder eines Streckzeitprofils einer Reckstange (10).

7. Verfahren nach einem der vorhergehenden Ansprüche, wobei der Schritt b1) nur oder ferner die folgenden Vorgänge umfasst: Erfassen eines Zeitpunkts (Ar), genannt Istzeitpunkt (Ar) des Vorblasbeginns in der Referenzstation oder einer anderen Station (7), zu dem der Druck im Vorformling (3) anzusteigen beginnt; Speichern dieses Zeitpunkts; Berechnen eines Vorblasende-Istzeitpunkts, wie etwa:

Vorblasende-Istzeitpunkt = Vorblasbeginn-Istzeitpunkt + $\Delta t - \delta$,
wobei $\Delta t$ eine vorgegebene Dauer des Öffnens des Vorblasmagnetventils (17) ist, $\delta$ eine vorgegebene Konstante ist;
Ableiten eines Vorblasende-Istdrucks (Fr) daraus anhand der Druckmessungen, die im Schritt b1) durchgeführt werden;
Vergleichen des so bestimmten Vorblasende-Istdrucks (Fr) mit einem Vorblasende-Referenzdruck (Fc) für die Referenzstation;
wenn der Vorblasende-Istdruck (Fr) um einen Wert vom Vorblasende-Referenzdruck (Fc) abweicht, der größer als eine Akzeptanztoleranz ist, wird ein neuer Vorblasdurchsatzwert (Dp) berechnet, der im Verhältnis zum Wert des Vorblasdurchsatzes (Dp) im Verlauf des Herstellungszyklus, innerhalb dessen der Vorblasende-Istdruck (Fr) berechnet wurde, verringert bzw. erhöht ist.

**8.** Verfahren nach einem der vorhergehenden Ansprüche, wobei die Regelungsparameter die Speicherung wenigstens einer Regelungsgrenze für wenigstens einen der Betriebsparameter der Maschine (1), überwachter Parameter genannt, enthalten, die Aktionen b2) des Schritts geregelter Herstellung ferner Vergleichen des für einen überwachten Parameter berechneten neuen Werts mit der Regelungsgrenze enthalten, und bei Überschreitung der Grenze ein Alarm einer Verschlechterung der Regelung ausgegeben wird, und die geregelte Herstellung anhand eines neuen Werts des überwachten Parameters fortgesetzt wird, der aus Folgendem ausgewählt wird: der Wert im Verlauf des vorhergehenden Herstellungszyklus, der Wert, der in der Initialisierungsphase eingegeben wird, oder eine Kombination der Werte.

**9.** Verfahren nach einem der vorhergehenden Ansprüche, wobei eine Maschine (1) genutzt wird, die mit einer ersten Station (7) und einer zweiten Station ausgerüstet ist, wobei eine der Stationen eine Referenzstation ist, wobei jede Station (7) mit einem Sensor (13) für einen Druck, der im Inneren des Vorformlings (3) der Station (7) vorherrscht, und einem Vorblasmagnetventil (17) versehen ist, das eine Ansprechzeit zwischen einem Zeitpunkt des Steuerns des Öffnens (TRo) des Magnetventils (17) und dem tatsächlichen Beginn des Druckanstiegs im Vorformling (3) aufweist, wobei bei dem Verfahren die Regelungsparameter den Beginn des Vorblasens und eine vorbestimmte Ansprechzeit umfassen, und wobei zusätzlich zu einem neuen Wert des Zeitpunkts des Steuerns (TRo) des Öffnens des Vorblasmagnetventils (17) eine Istansprechzeit berechnet wird,
wenn die Istansprechzeit länger als die vorbestimmte Ansprechzeit ist:

ein Driftalarm der Referenzstation ausgegeben wird, und/oder
für einen späteren Herstellungszyklus der Referenzzeitpunkt des Öffnens des Magnetventils (17) der zweiten Station berechnet wird, wobei dann die zweite Station als eine neue Referenzstation erachtet wird.

**10.** Maschine (1) zur zyklischen Herstellung durch Streckblasen aus Vorformlingen (3) aus Kunststoff, die Folgendes umfasst: eine Fluidquelle (15) mit einem Vorblasdruck, eine oder mehrere Streckblasstationen (7), wobei jede Station (7) eine Form (8) umfasst, die einen Hohlraum (9) aufweist, der dazu bestimmt ist, einen Vorformling (3) aufzunehmen; ein Magnetventil (17), das geeignet ist, das Innere des Vorformlings (3), der im Hohlraum (9) aufgenommen ist, mit der Fluidquelle (15) mit einem vorbestimmten Vorblasdurchsatz (Dp) in Verbindung zu bringen; eine Vorrichtung zur Steuerung des Öffnens und des Schließens des Magnetventils (17); einen Sensor (13), der geeignet ist, den Druck zu messen, der im Inneren des Vorformlings (3) vorherrscht; eine Vorrichtung zur Erfassung eines Zeitpunkts, Istzeitpunkt (Ar) des Vorblasbeginns genannt, zu dem der Druck im Vorformling (3) anzusteigen beginnt; eine Vorrichtung zum Vergleich dieses Istzeitpunkts (Ar) mit einem Referenzzeitpunkt (Ac) des Vorblasbeginns; eine Vorrichtung zur Regelung eines Zeitpunkts des Steuerns des Öffnens (TRo) des Magnetventils (17) je nach dem Ergebnis dieses Vergleichs,
**dadurch gekennzeichnet, dass** sie eine Vorrichtung zur Überwachung einer eventuellen vom Bediener vorgegebenen Änderung eines Betriebsparameters der Maschine (1), eine Vorrichtung zur Analyse einer Aufeinanderfolge von Zeitkurven eines Drucks, der im Verlauf einer Stabilisierungsphase ohne Regelung im Inneren des Vorformlings (3) vorherrscht, und eine Vorrichtung zur Aktualisierung wenigstens einer Regelungsreferenz umfasst, die an die Analysevorrichtung angeschlossen sind.

**11.** Maschine (1) nach dem vorhergehenden Anspruch, ferner umfassend eine steuerbare Vorrichtung, die geeignet ist, den Druckfluiddurchsatz zu variieren, oder ein steuerbares Magnetventil (17) mit variablem Durchsatz; eine Vorrichtung zur Erfassung eines Zeitpunkts, zu dem der Druck im Vorformling (3) eine Spitze erreicht, Vorblasdruckspitzen-Istzeitpunkt (Br) genannt; eine Vorrichtung zum Vergleich dieses Druckspitzen-Istzeitpunkts (Br) mit einem Druckspitzen-Referenzzeitpunkt (Bc); eine Vorrichtung zur Regelung des Durchsatzes, der in den Vorformling (3) eingespritzt wird, je nach dem Ergebnis dieses Vergleichs.

**12.** Maschine (1) nach dem vorhergehenden Anspruch, ferner umfassend eine Vorrichtung zur Berechnung einer Iststeigung (PRab) des Anstiegs des Drucks zwischen dem Druck, der zum Istzeitpunkt (Ar) des Vorblasbeginns gemessen wird, und dem Druck, der zum Druckspitzen-Istzeitpunkt (Br) gemessen wird; eine Vorrichtung zum Vergleich dieser Iststeigung (PRab) mit einer Referenzsteigung (PCab); eine Vorrichtung zur Regelung des Vorblasdurchsatzes (Dp), der in den Vorformling (3) eingespritzt wird, je nach dem Ergebnis dieses Vergleichs und/oder eine Vorrichtung zur Regelung des Drucks der Druckfluidquelle (15) je nach dem Ergebnis dieses Vergleichs, und/oder eine Vorrichtung zur Regelung einer Nenngeschwindigkeit oder eines Streckzeitprofils einer Reckstange (10) je nach dem Ergebnis dieses Vergleichs.

**13.** Maschine (1) nach dem vorhergehenden Anspruch, ferner umfassend eine Vorrichtung zur Erfassung eines Zeitpunkts, Vorblasende-Istzeitpunkt genannt, zu dem der Druck im Vorformling (3) wieder anzusteigen beginnt; eine Vorrichtung zum Vergleich des Vorblasende-Istdrucks (Fr), der zu diesem Zeitpunkt gemessen wird, mit einem Vorblasende-Referenzdruck (Fc); eine Vorrichtung zur Regelung des Vorblasdurchsatzes (Dp), der in den Vorformling (3) eingespritzt wird, je nach dem Ergebnis dieses Vergleichs.

14. Computerprogrammprodukt zur Implementierung auf einer Maschine (1) zur Herstellung von Behältern (2) nach einem der Ansprüche 10 bis 13 zur Durchführung des Verfahrens nach einem der Ansprüche 1 bis 9.


**Claims**

1. Process for regulating a cyclical production of containers (**2**) by stretch blow moulding from preforms (**3**) made of plastics material in a machine (**1**) comprising one or more stretch blow moulding stations (**7**), each designed to produce a container (**2**) during a production cycle, and each provided with a preblowing solenoid valve (**17**) fluidically connecting the preform (**3**) to a pressurized fluid source (**15**) providing a preblowing flow rate (**Dp**) during a preblowing phase, the regulating process comprising:

   a) an initializing phase including a step of installation by an operator and of storing of a plurality of operating parameters of the machine (**1**) during the production cycle, and of regulating parameters including at least one reference position (**Ac, Bc, PCab, Fc**) of at least one characteristic point (**A, B, Pab, F**) of a preblowing curve corresponding to the pressure prevailing inside the preform (**3**) during at least one part of the preblowing, said reference position (**Ac, Bc, PCab, Fc**) being determined by a reference instant and/or a reference pressure,
   b) a regulated production phase during which, for each production cycle, at least one preform (**3**) is stretched and blown by injection of a pressurized fluid in each station (**7**) and during which:

      - b1) for at least one reference station of the machine (**1**), the preblowing curve including the characteristic point is measured and stored, and a real instant and/or a real pressure is calculated or determined, corresponding to said characteristic point (**A, B, Pab, F**) for the measured preblowing curve, and
      - b2) a new value of at least one operating parameter of the machine (**1**) is calculated and stored as a function of a difference between the real instant and the reference instant and/or between the real pressure and the reference pressure,
      the regulating process being **characterized in that** the regulated production phase includes a step b3) of monitoring a possible change, imposed by the operator, of a value of an operating parameter of the machine (**1**), the regulating process further comprising a phase of automatically updating the regulating parameter or parameters, which is implemented in the event of an imposed change of an operating parameter of the machine (**1**), involving:

         c1) a stabilizing step during which the production is continued from the parameter imposed during a predetermined stabilizing period, and for each production cycle the actions b1) are executed, and the actions b2) are suspended, and
         c2) a step of correcting the reference instant and/or the reference pressure as a function of the real instant and/or real pressure values stored during the stabilizing step, in order to continue with the regulated production phase.

2. Process according to the preceding claim, in which those operating parameters of the machine (**1**) that can be recalculated during the step b2) are among: an instant (**TRo**) of commanding the opening of the preblowing solenoid valve (**17**), a value or a time profile of the preblowing flow rate (**Dp**), a preblowing pressure or a time profile of a travel of a stretching rod (**10**).

3. Process according to either of the preceding claims, in which the regulating parameters include storing at least one tolerance for accepting a real position (**Ar, Br, PRab, Fr**) of the at least one characteristic point (**A, B, Pab, F**) of the preblowing curve chosen relative to the reference position of said characteristic point (**A, B, Pab, F**), and in which there is no calculation of a new value for said operating parameter of the machine (**1**) if said difference is smaller than the acceptance tolerance.

4. Process according to one of the preceding claims, in which the regulating parameters comprise a reference instant (**Ac**) for the start of the increase in pressure inside the preform (**3**), termed start of preblowing reference instant (**Ac**), and a tolerance for the start of preblowing reference instant (**Ac**), and in which, if the real instant (**Ar**) of the start of the preblowing in the preform (**3**) of the reference station (**7**) is either later or earlier, by a time difference with respect to the start of preblowing reference instant **(Ac)** for said reference station that is greater than the acceptance tolerance, the new value calculated as the instant **(TRo)** of commanding the opening of the preblowing solenoid valve **(17)** of each of the stretch blow moulding stations **(7)** is then brought forward or respectively delayed, by said time difference, in all of the stretch blow moulding stations **(7).**

5. Process according to Claims 3 and 4 considered together, in which the regulating parameters further include:

a reference instant **(Bc)** of a peak in preblowing pressure in the preform **(3),** and an acceptance tolerance for the reference pressure peak instant **(Be),** in which the regulated production phase b) first comprises a possible imposed change in the instant **(TRo)** of commanding the opening of the preblowing solenoid valve **(17)** to a production cycle during which the real instant **(Ar)** of the start of the preblowing in the preform **(3)** is smaller than the start of preblowing acceptance tolerance,
a real instant **(Br)** of a pressure peak is calculated for the following production cycles, and if this is either earlier or later than the reference pressure peak instant **(Be),** by a time difference that is greater than the acceptance tolerance, a new value is calculated for the preblowing flow rate **(Dp),** this being respectively reduced or increased with respect to the value of the preblowing flow rate **(Dp)** during the production cycle during which the real pressure peak instant **(Br)** has been calculated.

6. Process according to the preceding claim, in which the regulating parameters further include a reference gradient **(PCab)** of the increase in pressure between the characteristic point **(A)** of the start of preblowing and the characteristic point **(B)** of the pressure peak, and an acceptance tolerance for said reference pressure increase gradient **(PCab)**, in which the regulated production phase first comprises the possible imposed change in the instant **(TRo)** of commanding the opening of the preblowing solenoid valve **(17)** to a production cycle during which the real instant **(Ar)** of the start of the preblowing in the preform **(3)** is smaller than the start of preblowing acceptance tolerance, then the possible imposed change in the preblowing flow rate **(Dp)** to a production cycle during which the real start of preblowing instant **(Ar)** and the real pressure peak instant **(Br)** are smaller than their respective acceptance tolerance, then a real gradient **(PRab)** of the increase in pressure between the real start of preblowing instant **(Ar)** and the real pressure peak instant **(Br)** is calculated for the following production cycles, and if the real gradient **(PRab)** differs from the reference gradient **(PCab)** by a difference greater than the gradient acceptance tolerance, the following are calculated:

- a new value for the nominal preblowing flow rate or a new time profile for the preblowing flow rate, and/or
- a new value for the pressure of the pressurized fluid source **(15),** and/or
- a new value for the nominal speed or the stretching time profile of a stretching rod (**10**).

7. Process according to any one of the preceding claims, in which step b1) comprises, solely or in addition, the operations consisting in: detecting an instant (**Ar**), termed real instant (**Ar**) of start of preblowing in the reference station or in another station (**7**), at which the pressure in the preform (**3**) starts to increase;

storing this instant;
calculating a real end of preblowing instant such that:

real end of preblowing instant = real start of preblowing instant $+\Delta t-\delta$, where $\Delta t$ is a predefined period of opening of the preblowing solenoid valve (**17**), $\delta$ is a predetermined constant;
deducing therefrom a real end of preblowing pressure (**Fr**) on the basis of pressure measurements taken in step b1);
comparing the real end of preblowing pressure (**Fr**) determined in this manner with a reference end of preblowing pressure (**Fc**) for the reference station;
if the real end of preblowing pressure (**Fr**) differs from the reference end of preblowing pressure (**Fc**) by a value greater than an acceptance tolerance, a new value is calculated for the preblowing flow rate (**Dp**), this being respectively reduced or increased with respect to the value of the preblowing flow rate (**Dp**) during the production cycle during which the real end of preblowing pressure (**Fr**) has been calculated.

8. Process according to one of the preceding claims, in which the regulating parameters include storing at least one regulating limit for at least one of the operating parameters of the machine (**1**), termed monitored parameter, the actions b2) of the regulated production step further include comparing the new calculated value for a monitored parameter with the regulating limit, in the event that said limit is exceeded, a breakdown in regulation alert is issued and the regulated production is continued from a new value of the monitored parameter, among: the value during the preceding production cycle, the value entered in the initializing phase, or a combination of said values.

9. Process according to one of the preceding claims, using a machine **(1)** equipped with a first station **(7)** and a second station, one of the stations being a reference station, each station **(7)** being provided with a pressure sensor **(13)** for measuring the pressure prevailing inside the preform **(3)** of said station **(7)** and with a preblowing solenoid valve **(17)** having a response time between an instant **(TRo)** of commanding the opening of the solenoid valve **(17)** and the effective start of the increase in pressure in the preform **(3),** in which process the regulating parameters comprise the start of the preblowing, and a predetermined response time, and in which in addition to a new value for the instant **(TRo)** of commanding the opening of the preblowing solenoid valve **(17),** a real response time is calculated, if the real response time is greater than the predetermined response time:

> an alert that the reference station is drifting is issued, and/or
> for a subsequent production cycle, the reference instant of opening of the solenoid valve **(17)** of the second station is calculated, the second station then being considered as a new reference station.

10. Machine **(1)** for cyclical production by stretch blow moulding using preforms **(3)** made of plastics material, which comprises: a fluid source **(15)** at a preblowing pressure, one or more stretch blow moulding stations **(7),** each station **(7)** comprising a mould **(8)** having a cavity **(9)** that is intended to receive a preform **(3)**; a solenoid valve **(17)** that is able to establish a connection between the interior of the preform **(3)** received in the cavity **(9)** and said fluid source **(15)** with a predetermined preblowing flow rate **(Dp)**; a device for commanding the opening and closing of the solenoid valve **(17)**; a sensor **(13)** that is able to measure the pressure prevailing inside the preform **(3)**; a device for detecting an instant, termed real start of preblowing instant **(Ar)**, at which the pressure in the preform **(3)** begins to increase; a device for comparing this real instant **(Ar)** with a reference start of preblowing instant **(Ac)**; a device for regulating an instant **(TRo)** of commanding the opening of the solenoid valve **(17)** as a function of the result of this comparison,
**characterized in that** it comprises a device for monitoring a possible change, imposed by the operator, of an operating parameter of the machine **(1),** a device for analyzing a succession of time curves of the pressure prevailing inside the preform **(3)** during a stabilizing phase without regulation, and a device for updating at least one regulation reference, these being connected to the analysis device.

11. Machine **(1)** according to the preceding claim, further comprising a controllable device that is able to vary the flow rate of pressurized fluid, or a controllable variable-flow rate solenoid valve **(17)**; a device for detecting an instant at which the pressure in the preform **(3)** reaches a peak, termed real preblowing pressure peak instant **(Br)**; a device for comparing this real pressure peak instant **(Br)** with a reference pressure peak instant **(Be)**; a device for regulating the flow rate injected into the preform **(3)** as a function of the result of this comparison.

12. Machine **(1)** according to the preceding claim, further comprising a device for calculating a real gradient **(PRab)** of the increase in pressure between the pressure measured at the real start of preblowing instant **(Ar)** and the pressure measured at the real pressure peak instant **(Br)**; a device for comparing this real gradient **(PRab)** with a reference gradient **(PCab)**; a device for regulating the preblowing flow rate **(Dp)** injected into the preform **(3)** as a function of the result of this comparison and/or a device for regulating the pressure of the pressurized fluid source **(15)** as a function of the result of this comparison, and/or a device for regulating the nominal speed or the stretching time profile of a stretching rod **(10)** as a function of the result of this comparison.

13. Machine **(1)** according to the preceding claim, further comprising a device for detecting an instant, termed real end of preblowing instant, at which the pressure in the preform **(3)** once again begins to increase; a device for comparing the real end of preblowing pressure **(Fr)** measured at this instant with a reference end of preblowing pressure **(Fc)**; a device for regulating the preblowing flow rate **(Dp)** injected into the preform **(3)** as a function of the result of this comparison.

14. Computer program product intended to be implemented on a machine **(1)** for manufacturing containers (2) according to one of Claims 10 to 13 in order to implement the process according to any one of Claims 1 to 9.

[Fig. 1]

[Fig. 2]

EP 3 956 125 B1

[Fig. 3]

27

[Fig. 4]

[Fig. 5]

[Fig. 6]

[Fig. 7]

[Fig. 8]

**RÉFÉRENCES CITÉES DANS LA DESCRIPTION**

**Documents brevets cités dans la description**

- WO 2013178903 A
- US 2010176528 A
- FR 2872082
- WO 2006008380 A